## Europäisches Patentamt
## European Patent Office
## Office européen des brevets

(11) Veröffentlichungsnummer: **0 195 039**
**B1**

(12) # EUROPÄISCHE PATENTSCHRIFT

(45) Veröffentlichungstag der Patentschrift:
13.09.89

(51) Int. Cl.⁴: **G 01 J 4/04,** G 01 N 21/21

(21) Anmeldenummer: **85904630.2**

(22) Anmeldetag: **25.09.85**

(86) Internationale Anmeldenummer:
**PCT/EP 85/00498**

(87) Internationale Veröffentlichungsnummer:
**WO 86/02159 (10.04.86 Gazette 86/08)**

(54) **MESSANORDNUNG ZUR ANALYSE ELEKTROMAGNETISCHER STRAHLUNG.**

(30) Priorität: 25.09.84 DE 3435189
07.01.85 DE 3500307

(43) Veröffentlichungstag der Anmeldung:
24.09.86 Patentblatt 86/39

(45) Bekanntmachung des Hinweises auf die Patenterteilung:
13.09.89 Patentblatt 89/37

(84) Benannte Vertragsstaaten:
AT BE CH DE FR GB IT LI NL SE

(56) Entgegenhaltungen:
WO-A-84/03357
US-A-3 183 763
US-A-3 481 671

(73) Patentinhaber: **Distl, Richard, Edlingerstrasse 7, D-8000 München 90 (DE)**
Patentinhaber: **Schmidt, Ulrich, Kasinostrasse 54, D-5100 Aachen (DE)**

(72) Erfinder: **Distl, Richard, Edlingerstrasse 7, D-8000 München 90 (DE)**
Erfinder: **Schmidt, Ulrich, Kasinostrasse 54, D-5100 Aachen (DE)**

(74) Vertreter: **von Bülow, Tam, Dipl.- Ing., Dipl.- Wirtsch.- Ing., SAMSON & BÜLOW Widenmayerstrasse 5, D-8000 München 22 (DE)**

EP 0 195 039 B1

LIBER, STOCKHOLM 1989

## Beschreibung

Die Erfindung bezieht sich auf eine Meßanordnung zur Analyse elektromagnetischer Strahlung gemäß dem Oberbegriff des Patentanspruches 1. Eine derartige Meßanordnung ist aus der WO84/03357 bekannt. Im einzelnen ist dort eine Mehrstrahl-Meßanordnung zur polarimetrischen Echtzeit-Untersuchung von Proben beschrieben, bei welcher ein linear polarisierter Meßstrahl nach Durchlaufen der Probe mittels eines ersten Strahlteilers in einen Meßstrahl und einen Referenzstrahl aufgeteilt wird. Die Intensitäten der beiden Teilstrahlen werden mittels Photodioden erfaßt und in einem Dividierer zueinander ins Verhältnis gesetzt, wobei der einen Photodiode ein Analysator mit ortsfester Durchlaßrichtung vorgeschaltet ist. Der durch die Verhältnisbildung auf die Intensität des Referenzstrahles normierte Intensitätswert des Meßstrahles wird einer digitalen Datenverarbeitungseinrichtung zugeführt. Zur Verhältnisbildung wird hierbei ein der digitalen Datenverarbeitungseinrichtung vorgeschalteter A-/D-Wandler verwendet.

Die Messung der Lichtwellenlänge ist die Grundlage einer Vielzahl von physikalischen Untersuchungen, beispielsweise in der Spektroskopie oder Photometrie. Auch die Qualitätskontrolle im technischen Bereich, z. B. die Messung der Schwerpunktwellenlänge von Halbleiterlasern, ist ein Anwendungsgebiet der Wellenlängenmessung.

Hierzu dienen herkömmlicherweise sog. Monochromatoren, die nur Licht mit einer bestimmten Wellenlänge in Abhängigkeit von der Stellung eines Beugungsgitters an einem Austrittsspalt passieren lassen. Um die notwendige Auflösung des Meßergebnisses zu erzielen, sind derartige Geräte sehr aufwendig aufgebaut. Ferner erlaubt dieses Funktionsprinzip nicht die Analyse von Licht bei rasch veränderlicher Wellenlänge oder kurzzeitigen Pulsen, da die Abgleichzeit für die Stellung des Beugungsgitters verhältnismäßig lange ist. Demgemäß ist keine Meßwerterfassung in Echtzeit möglich. Bei herkömmlichen Monochromatoren ist weiterhin von Nachteil, daß die Auflösung, neben anderen Parametern, in erster Linie durch die Breite des Austrittsspaltes bestimmt wird. Um eine hohe Auflösung zu erreichen, sind lange Wege innerhalb des Monochromators sowie geringe Spaltbreiten, was wiederum mit hohen Intensitätsverlusten verbunden ist, notwendig. Monochromatoren sind daher nur bedingt, z. B. unter Inkaufnahme langer Integrationszeiten, zur Analyse schwacher Signale geeignet, wie sie u.a. in der Ramanspektroskopie die Regel sind. Da außerdem Monochromatoren prinzipbedingt intensitätsmäßig über die vom Austrittsspalt durchgehende spektrale Bandbreite integrieren, ist eine eigentliche Bestimmung des Energieinhalts der zu analysierenden Strahlung nicht möglich, was jedoch in vielen Bereichen der chemischen und physikalischen Strukturaufklärung erforderlich wäre.

In zahlreichen Anwendungsgebieten in der Forschung und technischen Qualitätskontrolle steht die zu untersuchende Strahlung nur in Form kurzzeitiger Impulse zur Verfügung. Als Beispiel sei hierzu die Herstellung und der Einsatz von Impuls-Halbleiter- und Festkörperlaser genannt. Ferner ist in der chemischen Analytik festzustellen, daß bei der optischen Analyse vermehrt Strahlungsquellen Verwendung finden, die kürzere Lichtimpulse aussenden. Dies hat u.a. den Vorteil, daß die Probe geschont wird und gleichzeitig höhere optische Ausgangsleistungen zur Verfügung stehen. Zur Bestimmung der Wellenlänge bzw. Auswertung der spektralen Charakteristik sind hierbei Monochromatoren in der Regel nicht geeignet, da, wie bereits erläutert, das dispergierende Element, bedingt durch das Abgleichprinzip, innerhalb der kurzen Impulsdauer nicht das gesamte Spektrum zu überstreichen vermag.

In allen Bereichen der chemischen und physikalischen Analytik die sich des Mittels der Spektroskopie oder Photometrie bedienen, treten oft erhebliche Probleme auf, wenn Stoffe mit sehr ähnlichen Emissions- bzw. Absorptionspektren selektiv identifiziert werden sollen. Der Grund hierfür liegt darin, daß bei derartigen Meßaufgaben der Austrittsspalt des in den üblichen Spektrometern befindlichen Monochromators infinitesimal klein sein müßte, um zur Unterscheidung von Stoffen mit sehr ähnlichen Spektren die notwendige Auflösung zu erreichen. Mit einer Verkleinerung des Austrittsspaltes ist jedoch der große Nachteil verbunden, daß die Empfindlichkeit des Meßsystems erheblich verschlechtert wird, so daß der Austrittsspalt nicht beliebig verkleinert werden kann. Herkömmliche Spektralphotometer sind vielmehr darauf angewiesen, daß die im zu analysierenden Stoffgemisch enthaltenen Substanzen charakteristische Peaks aufweisen, anhand derer die Substanzen leicht identifiziert werden können. Ein Abriß der beschriebenen Problematik ist z. B. in der Auslegeschrift DE-AS-2 430 011 "Zweistrahl-Photometer mit Interferenzfilter" dargelegt.

Zur Untersuchung von kohärentem Licht stehen sog. Wavemeter zur Verfügung, welche die Wellenlänge aufgrund von Interferometrischen Messungen mittels eines Referenzlasers bestimmen. Auch dieses Verfahren ist sehr aufwendig und für viele Anwendungen zu langsam.

Es ist bereits lange bekannt, daß die optische Aktivität auch eine Funktion der Wellenlänge des die optisch aktive Substanz durchstrahlenden Lichtes ist. Diese wird als solche mit Optischer-Rotations-Dispersion (ORD) bezeichnet (vgl. z. B. Zeitschrift für Instrumentenkunde, 75. Jahrg., 1967, S. 111 - 124). Jeder optisch aktive Stoff weist ein eigenes, ihn charakterisierendes ORD-Spektrum auf. Dieses ist in der Wissenschaft für viele optisch aktive Substanzen, wie z. B. Quarz, sehr genau bekannt.

An der Physikalisch Technischen Bundesanstalt in Braunschweig wird seit Jahren die vorstehend beschriebene Eigenschaft für sehr genaue Messungen der Wellenlänge ausgenutzt (Siehe hierzu auch: "Zeitschrift für angewandte Physik", 20. Band, 5. Heft, 1966, Seite 419 bis 423). Hierbei erfolgt die Bestimmung der, durch einen 50 mm langen Quarzblock verursachten, Drehung von zuvor linear polarisiertem Licht mittels eines Kreispolarimeters (siehe z. B. Aufgabenbericht PTB, Labor für Polarimetrie). Diese, bereits seit langem bekannte, Meßmethode ist für höhere Auflösungen sehr geräteintensiv und bedingt durch das Abgleichprinzip des Kreispolarimeters auch sehr langsam.

Grundsätzlich lassen sich jedoch mit der Bestimmung der Wellenlänge über die ORD der optischen Aktivität sehr hohe Meßgenauigkeiten erzielen. Außerdem wird bei diesem Prinzip die optische Aktivität immer über die Bandbreite integriert, sodaß das Meßergebnis unmittelbar die Schwerpunktwellenlänge ergibt. Für viele Anwendungen ist gerade die Bestimmung dieser Größe von erheblicher Wichtigkeit. Trotzdem haben die meßtechnischen Probleme eine weitgehende Anwendung dieses Meßprinzips verhindert.

In der PCT-Anmeldung PCT/EP84/00050 (SCHMIDT, DISTL), Veröffentlichungsnummer WO-A-84/03357, ist eine Mehrstrahl-Meßanordnung zur polarimetrischen Untersuchung von Proben im Echtzeitverfahren beschrieben, welche nicht den Nachteil eines langsamen Abgleichs eines Kreispolarimeters aufweist.

Die Lehre der o.g. PCT/EP84/00050 beruht u.a. darauf, daß sich durch eine Verhältnisbestimmung der Relativintensität des zu analysierenden Lichtstrahls nach einem Analysator, zu dessen Absolutintensität vor dem Analysator, die Schwingungsrichtung des Lichtstrahls berechnen läßt. Hierbei wird der Lichtstrahl nach Durchlaufen der Probe mittels eines Strahlteilers, vorzugsweise eines Beugungsgitters, in einem Referenzstrahl und wenigstens einem Prüfstrahl, in dessen Strahlengang ein Analysator mit feststehender Durchlaßrichtung angeordnet ist, aufgeteilt. Die Intensitäten der Teilstrahlen werden mittels ihnen zugeordneten photoempfindlichen Fühlern erfaßt. Die Signalausgänge der photoempfindlichen Fühler sind zur Ermittlung von der Probe zuordenbaren polarimetrischen Größen mit den Eingängen einer Meßschaltung verbunden.

Diese Meßschaltung ist im wesentlichen wie folgt aufgebaut:

Mittels je einen jedem photoempfindlichen Fühler nachgeschalteten Kurzzeitspeicher werden die Ausgangssignale der photoempfindlichen Fühler synchron und kurzzeitig festgehalten. Eine den Kurzzeitspeichern zugeordnete Steuerschaltung übernimmt hierbei die Steuerung der Kurzzeitspeicher. Die Verhältnisbildung der Relativintensität zur Absolutintensität erfolgt mittels einer verzögerungsfrei arbeitenden Divisionsschaltung, welche eingangsseitig mit den Ausgängen der Kurzzeitspeicher verbunden ist. Zur Berechnung und Ausgabe von der Probe zuordenbaren optischen Aktivität, ist eine digitale Datenverarbeitungseinrichtung vorgesehen, welche eingangsseitig mit dem Ausgang der Divisionsschaltung verbunden ist. Ferner weist die Meßschaltung wenigstens einen A/D-Wandler auf, der die analogen Signale zur Weiterverarbeitung in digitale Form umwandelt.

Bei der o.g. Mehrstrahl-Meßanordnung nimmt hinsichtlich der Meßgenauigkeit die Wirkungsweise des Strahlteilers eine entscheidende Bedeutung ein. Dielektrische Strahlteiler sind z. B. nicht geeignet, da deren Teilungsverhältnis eine Funktion der Schwingungsrichtung des auftreffenden Lichtstrahls ist. Demzufolge geht in das Meßergebnis auch die verfälschende Wirkungsweise dieses Strahlteilers ein. In der o.g. PCT/EP84/00050 wird hierzu vorgeschlagen, als strahlteilendes Element ein Beugungsgitter zu verwenden. Hierbei ist vor allem wichtig, daß der auf das Beugungsgitter auftreffende Lichtstrahl immer in gleicher Weise auf deren Gitterstruktur auftrifft, da die Beugungseffizienz eine Funktion des Einfallswinkels ist. Demgemäß muß eine ausreichende Punktförmigkeit der Strahlungsquelle angestrebt werden, was nur durch eine aufwendige Führung des Strahlenganges erreicht werden kann. Ein weiterer Nachteil besteht darin, daß mit dieser Maßnahme entsprechende Lichtverluste verbunden sind. Da die Schwingungsrichtung des Referenzstrahls nicht definiert ist, verfälscht ferner die Vektorempfindlichkeit des, dem Referenzstrahl zugeordneten, photoempfindlichen Fühlers das Meßergebnis.

Eine Messung der Schwingungsrichtung von elektromagnetischer Strahlung bei veränderlicher Wellenlänge ist mit der genannten Mehrstrahl-Meßanordnung jedoch nicht möglich, da der Beugungswinkel am Gitter von der Wellenlänge abhängig ist, und somit den Detektoren keine feststehende Position zugeordnet werden kann.

Aufgabe der Erfindung ist es daher, die Meßanordnung der eingangs genannten Art dahingehend zu verbessern, daß bei möglichst hoher Maßgenauigkeit und gutem Auflösungsvermögen schnelle (bis hin zur Echtzeit) Messungen möglich sind, wobei ein möglichst großer Dynamikbereich der Intensität der zu untersuchenden Strahlung abgedeckt wird.

Diese Aufgabe wird durch die im Patentanspruch 1 angegebenen Merkmale gelöst. Vorteilhafter Ausgestaltungen und Weiterbildungen der Erfindung sind den abhängigen Ansprüchen zu entnehmen.

Die bei der Erfindung angewandte Meßmethode beruht u.a. auf der Ausnützung der Optischen-Rotations-Dispersion von optisch aktiven Substanzen. Hierbei wird die Schwingungsrichtung der zuvor linear polarisierten Strahlung nach Durchlaufen eines optisch aktiven Elements bestimmt. Aufgrund der damit gewonnenen Meßwerte, zusammen mit dem bekannten ORD-Spektrum der optisch aktiven Substanz, kann die Schwerpunktwellenlänge der elektromagnetischen Strahlung bestimmt werden. Da im Meßablauf prinzipiell keine bewegten Teile erforderlich sind, können diese Messungen in Echtzeit erfolgen.

Der dargelegte Erfindungsgegenstand eignet sich insbesondere zur Bestimmung der Schwerpunktwellenlänge von mono-chromatischer Strahlung, beispielsweise als Abstimmkontrolle bei Farbstoff- oder Festkörperlasern. Ferner können mit einer derartigen Meßanordnung auch sehr kurzzeitige Lichtimpulse, z. B. von Halbleiterimpulslasern, hinsichtlich der Wellenlänge und des Energieinhalts untersucht werden. Außerdem eröffnen sich im Bereich spektraler Analysen, wie in der Photometrie, durch die integrierende Wirkung des optisch aktiven Elements völlig neue Möglichkeiten zur Reinstoffcharakterisierung und Gemischanalyse. Derartige Analysen können in einer besonderen Ausgestaltung der Erfindung quasi in Echtzeit durchgeführt werden.

Die zu analysierende elektromagnetische Strahlung wird mittels eines Linearpolarisators in linear polarisierte Strahlung überführt, durchläuft ein optisch aktives Element mit bekannter optischer Aktivität und trifft anschließend auf wenigstens einen Analysator. Dabei ist vor dem Ausgang des Analysators eine Einrichtung zur Ermittlung eines zur Absolutintensität proportionalen Referenzsignals vorgesehen. Die vom Analysator durchgelassene Strahlung wird mittels eines ersten photoempfindlichen Fühlers erfaßt. Ferner trifft der mittels der genannten Einrichtung gewonnene Referenzstrahl auf einen zweiten photoempfindlichen Fühler. Zur Weiterverarbeitung der so erhaltenen elektrischen Signale sind die Ausgänge der photoempfindlichen Fühler schließlich mit den Eingängen einer Meßschaltung verbunden.

Zur Bestimmung der Schwingungsrichtung der auf den Analysator auftreffenden Strahlung und anschließender Ermittlung der Schwerpunktwellenlänge geht die erfindungsgemäße Lehre von dem, in der PCT-Anmeldung PCT/EP84/00050 beschriebenen Prinzip aus, mittels einer Verhältnisbestimmung der Relativintensität des zu analysierenden Lichtes nach einem Analysator zur Absolutintensität vor dem Analysator und anschließender Berechnung, die Schwingungsrichtung von linear polarisiertem Licht zu ermitteln.

Es läßt sich folgende Beziehung, auch Gesetz von Malus genannt, zur Berechnung der Intensität auf einem realen Analysator anwenden:

$$A = A_o \cdot \cos^2 \alpha \cdot C$$

wobei gilt:

A :    Intensität nach dem Analysator
$A_o$ :    Intensität vor dem Analysator
$\alpha$ :    Winkel zwischen der auftreffenden linear polarisierten Strahlung und der Durchlaßrichtung des Analysators
C :    Konstanter Faktor, bedingt durch Reflexionsverluste bei Ein- und Austritt der Strahlung sowie Absorption des Analysatormaterials

Durch Auflösen obiger Formel nach $\alpha$ läßt sich folgende Beziehung aufstellen:

$$\alpha = \arccos \sqrt{\frac{A}{A_o \cdot C}}$$

Mittels der Meßschaltung wird nun das Verhältnis von $A/A_o \cdot C$ ermittelt und der digitalen Datenverarbeitungseinrichtung zur weiteren Verarbeitung zugeführt.

In einer bevorzugten Ausgestaltung der Erfindung sind der Analysator und die Einrichtung zur Ermittlung des Referenzsignals in einem polarisierenden Strahlteiler, im folgenden strahlteilenden Analysator genannt, vereinigt.

Bei einem polarisierenden Strahlteiler kann jedoch keiner der Teilstrahlen unmittelbar einem Referenzwert (dieser entspricht der Absolutintensität) zugeordnet werden. Die erfindungsgemäße Lehre geht nun davon aus, daß sich die, am strahlteilenden Analysator auftreffende Lichtenergie, oder mit anderen Worten der Referenzwert, beispielsweise durch folgende Beziehung bestimmen läßt:

$$C \cdot A_o = Eo + Ea$$

wobei gilt:

$A_o$:    Energie des Lichtes vor dem strahlteilenden Analysator
Eo:    Energie des ordentlichen Teilstrahls
Ea:    Energie des außerordentlichen Teilstrahls
C :    Konstanter Faktor

Die Intensitäten der beiden Teilstrahlen werden nun mittels ihnen zugeordneten photoempfindlichen Fühlern erfaßt. Um gleiche Meßbedingungen und damit eine Erhöhung der Meßgenauigkeit insgesamt zu erreichen, ist vorzugsweise jedem photoempfindlichen Fühler ein Kurzzeitspeicher nachgeschaltet. In einer besonders bevorzugten Ausgestaltung sind die Kurzzeitspeicher Sample/Hold-Schaltungen. Eine erste Steuerschaltung, welche den Kurzzeitspeichern zugeordnet ist, gewährleistet eine synchrone Ansteuerung, d.h. die Festhaltung der Intensitäten zum exakt gleichen Zeitpunkt.

Gemäß der oben beschriebenen Beziehung wird nun mittels einer Additionsschaltung, welche den Kurzzeitspeichern nachgeschaltet ist, zunächst die Summe von Eo und Ea ermittelt. Der Ausgangswert der Additionsschaltung ist demgemäß direkt proportional zu der Energie des Lichtes vor dem strahlteilenden Analysator. Mit Hilfe einer Divisionsschaltung, welche eingangsseitig mit dem Ausgang der Additionsschaltung und dem Ausgang eines der beiden Kurzzeitspeicher verbunden ist, wird anschließend das Verhältnis der Intensität des dem betreffenden Kurzzeitspeichers zugeordneten Teilstrahls, d.h. die Relativintensität, zum Ausgangswert der Additionsschaltung, d.h. zur Absolutintensität, ermittelt. Der so ermittelte normierte Wert wird dann mittels eines Analog/Digital-Wandlers digitalisiert und der digitalen Datenverarbeitungseinrichtung zur weiteren Auswertung zugeführt, d.h. der Drehwert α errechnet.

Der in der vorbeschriebenen Meßanordnung ermittelte Drehwert α steht mit der spezifischen optischen Aktivität des optisch aktiven Elements in folgender Beziehung:

I. Für in optisch inaktiven Lösungsmitteln gelöste optisch aktive Substanzen:

$$[\alpha] = \frac{\alpha \cdot 100}{C \cdot L}$$

wobei gilt:

α : gemessener Drehwert
C : Konzentration des optisch aktiven Stoffes
L : durchlaufene Schichtlänge

II. Für optisch aktive Feststoffe:

$$[\alpha] = \frac{\alpha}{L}$$

Die Werte C und L werden hierbei aus einem Speicher, welcher mit der digitalen Datenverarbeitungseinrichtung verbunden ist, abgerufen.

Das Optische-Rotations-Dispersions- (ORD-) Spektrum einer optisch aktiven Substanz, d.h. die Abhängigkeit der optischen Aktivität von der Wellenlänge, ist ein unveränderliches Charakteristikum dieser Substanz und wird beschrieben durch:

$$f(\lambda) = [\alpha]_\lambda$$

Die Umkehrfunktion der ORD wird nun wie folgt dargestellt:

$$\lambda = f([\alpha])$$

Zum Vergleich der ermittelten Drehung der Polarisationsebene mit dem ORD-Spektrum des optisch aktiven Elements ist erfindungsgemäß ein Speicher, in welchem ebenfalls die Umkehrfunktion der ORD, beispielsweise in Form einer Tabelle, abgespeichert ist, mit der digitalen Datenverarbeitungseinrichtung verbunden.

Die Wahl eines geeigneten optisch aktiven Elements wird im wesentlichen durch den geforderten Wellenlängen-Meßbereich und der gewünschten Auflösung bestimmt. Z. B. gibt es eine große Anzahl von optisch aktiven Stoffen, die in der Umgebung von Resonanzstellen sehr stark steigende bzw. abfallende ORD aufweisen, sodaß an diesen Stellen extrem hohe Meßwertauflösungen erreichbar sind. Im Gegensatz dazu bietet beispielsweise Kristallquarz eine gleichmäßige Genauigkeit über einen großen Meßbereich. In einer bevorzugten Ausführungsform der erfindungsgemäßen Wellenlängen-Meßanordnung bestehen die optisch aktiven Elemente aus entsprechend geschnittenen Quarzkristallplatten. Das ORD-Spektrum von Quarz folgt dem normalen Cotton-Effekt, auch ist dessen Charakteristik aus dem Bereich der Polarimetrie, in der er als Eichstandard eingesetzt wird (siehe Icumsa Proceedings, 17th Session, Montreal 1978), ausgezeichnet bekannt.

Als strahlteilende Analysatoren werden hinsichtlich der hohen Anforderungen an die Meßgenauigkeit im allgemeinen strahlteilende Kristallpolarisatoren, beispielsweise Foster-Strahlteiler, eingesetzt. Die Trennung der orthogonal zueinander polarisierten Strahlungskomponenten erfolgt demgemäß aufgrund der für die Teilstrahlen unterschiedlichen optischen Dichten im Polarisatormedium. Die Verwendung eines strahlteilenden Analysators zur Erzeugung des Referenzsignals hat insbesondere den Vorteil, daß die spektrale Absorption des optisch aktiven Elements keinen Einfluß auf das Meßergebnis hat.

In einer besonderen Ausgestaltung der erfindungsgemäßen Meßanordnung kann ebenfalls dadurch ein hoher Polarisationsgrad erreicht werden, indem beispielsweise weniger aufwendige polarisierende dielektrische Strahlteilerwürfel mit naturgemäß geringem Löschungsvermögen der Reihe nach angeordnet werden. Demgemäß kann damit der durchgehende Strahlanteil in beliebig hohem Maße polarisiert werden. Zur Bestimmung des dem ordentlichen Teilstrahl zugeordneten Intensitätswertes Eo werden mittels einer Additionsschaltung die Intensitäten aller reflektierten Komponenten der Strahlteilerwürfel aufsummiert. Der Signalausgang des dem transmittierten Teilstrahl des letzten polarisierenden Strahlteilers zugeordneten photoempfindlichen Fühlers ist hierbei direkt mit dem Eingang eines Kurzzeitspeichers verbunden. Der Eingang des anderen Kurzzeitspeichers ist hingegen an den Ausgang der Summationsschaltung angeschlossen. Die Ausgangssignale der beiden Kurzzeitspeicher werden dann in gleicher Weise behandelt, wie in der eingangs dargestellten Meßschaltung.

Gemäß einer weiteren Ausgestaltung der Erfindung kann die Größe $A_0$ auch dadurch bestimmt werden, indem im Strahlengang vor dem Analysator eine Einrichtung vorgesehen ist, mit deren Hilfe ein Teil der zu analysierenden Strahlung aus dem Strahlengang ausgekoppelt werden kann. Die genannte Einrichtung ist vorzugsweise ein Strahlteiler mit einem definierten Auskoppelfaktor, beispielsweise ein metallischer oder dielektrischer Strahlteiler. Zur Ermittlung des Referenzsignals befindet sich in einem der Teilstrahlen des Strahlteilers ein photoempfindlicher Fühler als Detektor.

In einer besonders bevorzugten Ausführungsform ist der Strahlteiler vor dem Linearpolarisator angeordnet. Gleichwohl kann der Strahlteiler auch nach dem Polarisator angeordnet, oder dessen Funktion mit der des Linearpolarisators in Form eines polarisierenden Strahlteilers vereinigt sein. Befindet sich die genannte Einrichtung zwischen dem optisch aktiven Element und dem Analysator, so darf diese die Polarisationseigenschaften der durchsetzenden Strahlung nicht undefiniert verändern, denn andernfalls wäre der nachfolgende Analysator sinnlos. Darüberhinaus gibt es auch noch eine Reihe anderer Verfahren zur Erzeugung eines Referenzsignals, z. B. indem zeitweise ein Spiegel in den Strahlengang eingebracht wird oder daß beispielsweise wenigstens eine der Polarisationseinrichtungen oder das optisch aktive Element zyklisch aus dem Strahlengang geschwenkt werden.

Gemäß der vorstehend beschriebenen Anordnung wird direkt ein Referenzstrahl aus dem Strahlengang ausgekoppelt. Der diesen Teilstrahl zugeordnete photoempfindliche Fühler liefert ein Ausgangssignal, welches demzufolge direkt proportional zur Absolutintensität von dem Analysator ist. Demgemäß entfällt auch die, in der eingangs beschriebenen Meßschaltung notwendige, Additionsschaltung, welche die Intensitäten der aus den strahlteilenden Analysator austretenden Teilstrahlen zu einem Referenzwert aufsummiert. Die Signalausgänge der den photoempfindlichen Fühlern zugeordneten Kurzzeitspeichern sind nun vielmehr direkt mit den Eingängen der Divisionsschaltung verbunden. Die weitere Verarbeitung der Meßsignale erfolgt in analoger Weise zu der, wie sie in der eingangs dargestellten Meßschaltung beschrieben ist.

Steht die Durchlaßrichtung des Linearpolarisators parallel zur Durchlaßrichtung des Analysators, so darf die von dem optisch aktiven Element hervorgerufene Drehung der Lichtschwingungsrichtung maximal 90 Winkelgrade betragen, um Mehrdeutigkeiten im Meßergebnis auszuschließen. Da die optische Aktivität proportional zur durchlaufenen Schichtlänge ist, muß demzufolge diese so gewählt werden, daß die induzierte Drehung in dem geforderten Meßbereich 90 Winkelgrade nicht überschreitet.

Die Gesamtauflösung des Meßsystems, d.h. der Wellenlänge, wird durch das Differential $d\lambda/d\alpha$ zusammen mit der Auflösung von $\alpha$ bestimmt. Daraus läßt sich erkennen, daß entweder bei geringer Schichtlänge eine kleine Auflösung mit einem großen Meßbereich oder bei großer Schichtlänge eine große Auflösung mit kleinem Meßbereich erzielt werden kann.

In manchen Anwendungen wird ein besonders großer Meßbereich verbunden mit einer hohen Auflösung notwendig sein. Wie bereits dargestellt, muß, um eine hohe Auflösung zu erreichen, die durchlaufene Schichtlänge des optisch aktiven Elements verhältnismäßig groß sein. Demgemäß kann dann bei einem vorgegebenen Meßbereich auch die durch das optisch aktive Element hervorgerufene Drehung der Schwingungsebene 90 Winkelgrade übersteigen.

Zwischen dem gemessenen und tatsächlichen Drehwert besteht dann folgende Beziehung:

$$\alpha = \varphi + k \cdot 90 \text{ Grad}$$

wobei gilt:

k : ganze Zahl
$\alpha$ : tatsächlicher Drehwert
$\varphi$ : gemessene Drehwert

Zur Bestimmung der Variablen k kann beispielsweise mittels eines Strahlteilers wenigstens ein weiterer Strahl aus der zu analysierenden elektromagnetischen Strahlung ausgekoppelt werden. Dieser wird ebenfalls mittels eines Linearpolarisators in linear polarisierte Strahlung überführt, durchläuft eine optisch aktive Substanz, und trifft anschließend ebenfalls auf einen Analysator. Schließlich weist die Meßanordnung wenigstens eine Einrichtung auf, mit der ein Referenzsignal erzeugt wird. Die Meßschaltung ist hierbei auch zur Verarbeitung der Ausgangssignale der im zweiten Strahlengang befindlichen photoempfindlichen Fühler ausgelegt. Meßtechnisch gesehen werden demgemäß beide Strahlengänge gleichermaßen behandelt.

Die optisch aktiven Substanzen, welche den beiden Strahlengängen zugeordnet sind, haben hierbei eine voneinander verschiedene optische Aktivität, d.h. bei gleicher spezifischer optischer Aktivität eine unterschiedliche Schichtlänge. Der Strahl, im folgenden Meßstrahl genannt, welcher das optisch aktive Element mit der größeren Schichtlänge und demzufolge mit der größeren Auflösung durchsetzt, dient zur eigentlichen Meßwertbestimmung. Der andere Strahl, im folgenden Meßbereichsstrahl genannt, welcher also das optisch aktive Element mit der geringeren Schichtlänge und demzufolge geringeren Auflösung durchsetzt, dient im wesentlichen zur Ermittlung des Wellenlängenbereichs.

Da die durchlaufene Schichtlänge und die damit verursachte Drehung der Schwingungsebene zueinander proportional sind, läßt sich die Beziehung aufstellen:

$$\alpha_1/s_1 = \alpha_2/s_2$$

wobei gilt:

$\alpha_1$ : tatsächlicher Drehwert bei der Schichtlänge $s_1$
$\alpha_2$ : tatsächlicher Drehwert bei der Schichtlänge $s_2$
$s_1$ : Durchlaufene Schichtlänge des Meßstrahls
$s_2$ : Durchlaufene Schichtlänge des Meßbereichsstrahls

Durch Verknüpfung beider Formeln erhält man die Beziehung:

$$(\varphi_1 + k_1 \cdot 90 \text{ Grad}) \cdot s_2 = (\varphi_2 + k_2 \cdot 90 \text{ Grad}) \cdot s_1$$

Wählt man hierbei die Schichtlänge des dem Meßbereichsstrahl zugeordneten optisch aktiven Elements derart, daß über den geforderten Meßbereich der Drehwert 90 Winkelgrade nicht überschreitet, so kann man $k_2 = 0$ setzen.

Somit erhält man:

$$\varphi_2 = s_2/s_1 \cdot (\varphi_1 + k_1 \cdot 90 \text{ Grad})$$

Durch Umformen vorstehender Formel ergibt sich ferner:

$$k_1 \cdot 90 \text{ Grad} = \varphi_2 \, s_1/s_2 - \varphi_1$$

Durch Wiedereinsetzen der so erhaltenen Beziehung in die bereits o.g. allgemeine Formel ergibt sich schließlich

$$\alpha_1 = \varphi_1 + INT \left( \frac{\varphi_2 \, s_1/s_2 - \varphi_1}{90 \, \text{Grad}} \right) \cdot 90 \text{ Grad}$$

Aus den somit mit einer höheren Genauigkeit ermittelten Drehwert $\alpha$ wird, wie bereits beschrieben, mittels des ORD-Spektrums die Schwerpunktwellenlänge der zu analysierenden elektromagnetischen Strahlung bestimmt. Aufgrund der INT-Funktion (Integer) muß die Bestimmung von $\varphi_2$, d.h. der gemessene Drehwert im Meßbereichsstrahlengang, nicht mit der Genauigkeit erfolgen, wie die Bestimmung von $\varphi_1$. Demgemäß können die den Meßbereichsstrahlengang zugeordneten Bauelemente mit einer wesentlich geringeren Genauigkeit gewählt werden.

In einer besonderen Ausgestaltung der Erfindung ist jedem Kurzzeitspeicher ein in seiner Verstärkung programmierbarer Verstärker vorgeschaltet. Hierzu werden vorzugsweise sog. Instrumentenverstärker eingesetzt, bei welchen der verstärkungsbestimmende Widerstand mittels eines Widerstands- und Schalternetzwerkes verändert werden kann. Die Schalternetzwerke werden dabei von einer zweiten Steuerschaltung angesteuert. Unterschiedliche Intensitäten der zu analysierenden elektromagnetischen Strahlung können somit in gewissen, durch die Werte der Widerstände im Widerstandsnetzwerk festgelegte, Stufen ausgeglichen werden.

Der erzielte Vorteil liegt darin, daß nur die analogen Komponenten vor dem Instrumentenverstärker, d.h. die photoempfindlichen Fühler und deren Eingangs-Operationsverstärker, der gewünschten Auflösung und Genauigkeit multipliziert mit dem geforderten Dynamikbereich, welcher durch unterschiedliche Intensitäten der zu analysierenden elektromagnetischen Strahlung gegeben ist, genügen müssen. Demgegenüber müssen sämtliche analogen Komponenten nach dem Instrumentenverstärker nur der gewünschten Meßgenauigkeit genügen. Ist z. B. eine Auflösung und Genauigkeit des Meßergebnisses von 0,01 Winkelgraden erforderlich und sollen Strahlungen untersucht werden können, deren Intensität um den Faktor 100 schwanken kann, so dürfen die analogen Komponenten nach dem Instrumentenverstärker eine maximale Nichtlinearität von 15 ppm, die vor dem Instrumentenverstärker von 0,15 ppm haben. Diese Tatsache ist von erheblicher Bedeutung, da es praktisch keine Sample/Hold-Schaltungen gibt (hier als Kurzzeitspeicher), welche eine Genauigkeit von 0,15 ppm haben. Ohne die erfindungsgemäße Meßanordnung mit den programmierbaren Instrumentenverstärker, müßte demzufolge zumindest bei geringeren Strahlungsintensitäten eine erhebliche Verschlechterung der Meßgenauigkeit hingenommen werden. An dieser Stelle sei jedoch betont, daß die in der Verstärkung programmierbaren Instrumentenverstärker nur deshalb notwendig sind, um die ihnen nachfolgenden analogen Bausteine möglichst optimal auszusteuern, mit dem Ziel, deren Linearitätseigenschaften bei geringeren Strahlungsintensitäten zu bewahren. Wegen der Divisionschaltung ist jedoch das Meßergebnis grundsätzlich unbeeinflußt von Veränderungen der Intensität der zu analysierenden elektromagnetischen Strahlung.

Aufgrund der nicht vermeidbaren Widerstandstoleranzen im Widerstandsnetzwerk der programmierbaren Instrumentenverstärker ergeben sich Ungleichheiten der Verstärkungsgrade bei den Instrumentenverstärkern untereinander. Um diese Ungleichheiten bestimmen zu können, sind erfindungsgemäß vor jedem Instrumentenverstärker Schaltelemente vorgesehen, mit welchen eine Kalibrierspannung an die Eingänge der Instrumentenverstärker geleitet werden kann. Diese Schaltelemente werden mittels einer ihnen zugeordneten dritten Steuerschaltung kontrolliert.

Der Kalibriervorgang funktioniert im wesentlichen wie folgt:

Zuerst wird die Verstärkung der Instrumentenverstärker mittels der zweiten Steuerschaltung auf den Wert 1 programmiert. Darauffolgend leiten die Schaltelemente an die Eingänge der Instrumentenverstärker eine Kalibrierspannung mit dem Wert zu, bei welchem die nachfolgenden Komponenten in ihrem Dynamikbereich ausgesteuert werden. Das am Analog/Digital-Wandler anliegende Signal wird daraufhin digitalisiert und die so erhaltene Information in einem Speicher abgelegt. In den folgenden Schritten wird die Verstärkung jeweils auf den nächst höheren Wert eingestellt und der vorstehend beschriebene Vorgang solange wiederholt, bis sämtliche Verstärkungsstufen erfaßt sind. Die so erhaltenen, zu jeder Verstärkungsstufe korrelierenden, abgespeicherten Werte werden dann als Korrekturfaktoren mit den jeweiligen Meßwerten, entsprechend der gerade eingestellten Verstärkungsstufe, verrechnet. Ferner kann der Offset dadurch ermittelt werden, indem als Kalibrierspannung der Wert 0 Volt angelegt wird. Der beschriebene Kalibriervorgang kann auch während dem laufenden Meßvorgang erfolgen. Demgemäß werden sämtliche Drifts erfaßt und dementsprechend die Korrekturfaktoren aktualisiert.

In einer besonders bevorzugten Ausgestaltung der erfindungsgemäßen Meßanordnung werden die notwendigen Kalibrierspannungen mittels eines Digital/Analog-Wandlers erzeugt. Damit ist außerdem der Vorteil verbunden, eine Vielzahl von unterschiedlichen Spannungswerten an den Eingang der Instrumentenverstärker anlegen zu können, womit auch die Linearitätsverhalten der analogen Komponenten ermittelt werden können. So kann beispielsweise ein, nach dem Einschalten des Meßsystems folgender, Systemtest, versteckte Fehler innerhalb der analogen Schaltung feststellen.

Wie bereits erläutert, können bei hohen Anforderungen an die Auflösung mit gleichzeitig großem Meßbereich Drehwerte über 90 Winkelgrade und damit Mehrdeutigkeiten auftreten. Um diese Mehrdeutigkeiten dennoch auszuschließen, werden erfindungsgemäß wenigstens zwei Messungen bei unterschiedlichen optischen Aktivitäten durchgeführt. Jedoch müssen diese Messungen nicht zwangsweise gleichzeitig erfolgen, wie in der beschriebenen Meßanordnung mit einem Meßstrahlengang und einem Meßbereichsstrahlengang, sondern können auch zeitlich nacheinander durchgeführt werden. In diesem Falle kann beispielsweise die optische Aktivität des optisch aktiven Elements bei zwei aufeinanderfolgenden Messungen variiert werden. Erreichen kann man dies z. B. durch Veränderung des Druckes bei zirkular spannungsdoppelbrechenden Materialien oder durch Veränderung eines magnetischen bzw. elektrischen Feldes bei Medien, die einen magneto- oder elektro-optischen Effekt zeigen.

In einer bevorzugten Ausführung der erfindungsgemäßen Meßanordnung sind auf einer rotierenden Trommel, deren Rotationsachse parallel zur optischen Achse liegt, wenigstens zwei optisch aktive Elemente mit einer voneinander verschiedenen optischen Aktivität angeordnet. Dabei ragt die Trommel gerade soweit in den Strahlengang hinein, daß durch eine Drehung der Trommel die optisch aktiven Elemente nacheinander zyklisch in den Strahlengang eingeschwenkt werden. Der die Trommel antreibende Motor ist vorzugsweise mit einem Winkelgeber ausgestattet, welcher widerum elektrisch mit der digitalen Datenverarbeitungseinrichtung verbunden ist. Demgemäß erhält diese immer einen Aufschluß darüber, welches optisch aktive Element sich gerade im Strahlengang befindet, so daß eine exakte Zuordnung eines gemessenen Drehwertes zu dem entsprechenden optisch aktiven Element gewährleistet ist. Ferner kann die genannte Trommel, bzw. ein funktionsgleiches Bauteil (z. B. linear verschieblicher Schlitten), auch einen Bereich aufweisen, in dem sich kein optisch aktives Element befindet. Beim Durchlauf dieses Sektors durch den Strahlengang kann beispielsweise eine Leermessung, d.h. eine Kalibrierung des gesamten Systems, erfolgen.

In einer weiteren erfindungsgemäßen Ausgestaltung der Meßanordnung wird die optische Aktivität durch Veränderung der von der zu analysierenden Strahlung durchlaufenen Schichtlänge gesteuert. Hierzu ist eine Einrichtung vorgesehen, die aus wenigstens zwei gegensinnig, senkrecht im Strahlengang angeordneten, optisch aktiven Keilen besteht, die relativ zueinander verschiebbar sind. Beispielsweise ist einer der beiden Keile feststehend und der andere beweglich gelagert. Durch Relativverschiebung der Keile zueinander kann demzufolge die Gesamtschichtlänge homogen über den Strahlquerschnitt verändert werden. Vorzugsweise besteht dieses Keilpaar aus Quarz, wobei dessen Kristallachse entsprechend orientiert ist. Die genannte Vorrichtung hat nicht nur den Vorteil, daß mittels zwei aufeinanderfolgenden Messungen bei unterschiedlichen Keilstellungen Mehrdeutigkeiten im Meßergebnis ausgeschlossen werden können; die Tatsache, daß die Gesamtschichtlänge stufenlos oder in verhältnismäßig feinen Schritten verändert werden kann, ermöglicht immer eine Messung in dem Bereich der Sinus-Quadrat-Transmissionsfunktion des Analysators, in welchem die Steigung, und folglich auch die Auflösung des Meßergebnisses, am größten ist.

Wie bereits dargestellt, ist Quarz als optisch aktives Elements besonders gut geeignet. Will man extrem hohe Auflösungen erreichen, so muß die Schichtlänge des Quarzes sehr groß sein. Insbesondere natürlicher Quarz mit der benötigten Reinheit über eine derartig große Schichtlänge ist jedoch relativ teuer. Zur Lösung dieses Problems wird erfindungsgemäß vorgeschlagen, den Strahlengang mit Mitteln der linearen Optik so zu gestalten, daß das bzw. die optisch aktiven Elemente mehrfach von der zu analysierenden elektromagnetischen Strahlung durchlaufen werden. Dabei wird bei jedem Umlauf, beispielsweise mittels eines teildurchlässigen Spiegels, immer nur ein Teil der Strahlung aus dem Kreislauf zur Detektion ausgekoppelt. Die Drehung der Polarisationsebene des Strahlungsanteils, der nicht ausgekoppelt wird, erhöht sich indessen bei jedem Umlauf um einen konstanten Betrag. Insgesamt gesehen wird dann ein charakteristischer Mittelwert sämtlicher Drehanteile gemessen. Dieser Mittelwert der einzelnen Drehanteile kann in entsprechender Weise exakt einem Frequenzwert der zu analysierenden Strahlung zugeordnet werden, wie ein gemäß der bereits beschriebenen Meßanordnung bestimmter diskreter Drehwert.

Gemäß einer Ausgestaltung der Erfindung ist die Meßvorrichtung eingangsseitig, z. B. vor der Eintrittsfläche des Linearpolarisators, mit einer Einrichtung versehen, welche eine, vom Standort und der Abstrahlcharakteristik der Strahlungsquelle, unabhängige Analyse ermöglicht. Hierzu können beispielsweise eine Blende, ein Lichtleiter, oder andere abbildende Elemente dienen. Um die erfindungsgemäße Meßvorrichtung z. B. am Ausgang eines Monochromators anbringen zu können, kann eine eingangsseitige Blende auch als Spalt ausgebildet sein.

Die Anwendungsmöglichkeiten der im vorausgehenden beschriebenen Meßanordnung beschränken sich nicht allein auf die Messung von monochromatischer Strahlung. In einer besonderen Ausführungsform ist die erfindungsgemäße Meßanordnung mit einer Vorrichtung versehen, die nur ein diskretes Frequenzband der zu untersuchenden elektromagnetischen Strahlung durchläßt. Derartige Vorrichtungen können z. B. Gitter bzw. Prismen oder daraus aufgebaute Monochromatoren, akusto-optische Filter oder Farb- sowie Interferenzfilter sein. Grundsätzlich können diese an einer beliebigen Stelle im Strahlengang angeordnet sein. Insbesondere durch die vorteilhafte Tatsache, daß bei der vorliegenden Meßanordnung immer der optische Schwerpunkt bestimmt wird, ermöglicht in Verbindung mit den genannten Monochromatoreinrichtungen spektrale Untersuchungen mit einer bisher nicht gekannten Auflösung und Genauigkeit.

In einer besonders bevorzugten Ausführungsform besteht die o.g. Vorrichtung aus einem Interferenzverlaufsfilter, dessen spektrale Transmissionseigenschaften eine Funktion des Ortes auf dem Filter sind. Dieser Filter ist senkrecht zur optischen Achse im Strahlengang, z. B. mittels eines Schrittmotors beweglich, angeordnet.

In einer anderen Ausführungsform ist die Meßanordnung zur Bestimmung der spektralen Charakteristik von elektromagnetischer Strahlung mit einer fest angeordneten Vorrichtung versehen, welche die zu untersuchende Strahlung spektral zerlegt. Diese Vorrichtung befindet sich vorzugsweise vor dem Analysator und kann beispielsweise ein dispergierendes Element (Beugungsgitter) sein. Die zu analysierende Strahlung wird demzufolge spektral aufgefächert, wobei zur Detektion dieser nunmehr mehrere photoempfindliche Fühler der Reihe nach angeordnet sind. Jedem photoempfindlichen Fühler wird demzufolge ein diskretes Frequenzband zugeführt. Die photoempfindlichen Fühler können beispielsweise in Form eines Photodioden-Arrays zusammengefaßt sein. Die Ausgangssignale der einzelnen Photoelemente werden dann wie in gewohnter Weise mittels ihnen zugeordneten Sample & Hold - Schaltungen festgehalten. Da damit bei einer Vielzahl von unterschiedlichen Frequenzbändern (bestimmt durch die Anzahl der Photodioden) die optischen Schwerpunkte gleichzeitig ermittelt werden, erfolgt die Erfassung der gesamten spektralen Charakteristik der Strahlung in Echtzeit.

Zur spektrometrischen und/oder photometrischen Untersuchung von Proben ist in einer weiteren besonderen erfindungsgemäßen Ausgestaltung die Meßanordnung mit wenigstens einem Probenraum versehen. Eine derartige Meßanordnung ermöglicht Reinstoffe zu charakterisieren und Gemische zu analysieren, die aus einer großen Anzahl von Komponenten bestehen. Zur Anwendung der beschrieben Meßanordnung wird im Folgenden ein geeignetes Verfahren beschrieben, welches gewichtete Spektralintegration genannt wird:

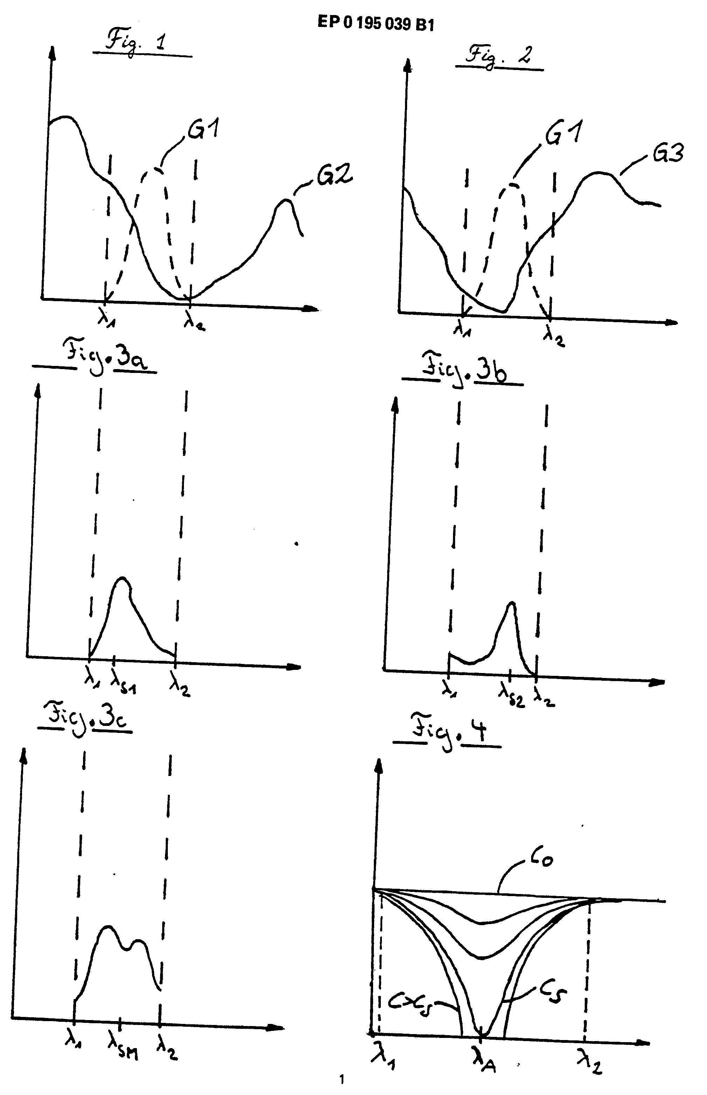

In Fig. 1 zeigt der Graph G2 das Emissionsspektrum $I1(\lambda)$ eines ersten Stoffes. Der Graph G1 in der Figur 1 beschreibt nun die prozentuale Transmissionsfunktion $T(X1,\lambda)$ eines Interferenzverlaufsfilters an der Stelle X1. Durchläuft die emittierte Strahlung demnach den Filter an der Stelle X1 und durchsetzt anschließend den ersten Stoff, so ergibt sich dahinter ein Frequenzband mit der Intensitätsverteilung $I2(X1,\lambda)$. Der genannte Zusammenhang läßt sich auch durch folgende Formel beschreiben:

$$I2(X1,\lambda) = T(X1,\lambda) \cdot I1 (\lambda)$$

wobei gilt:

$I1(\lambda)$ : Emissions- oder Absorptionsspektrum der Probe ohne Filter

$T(X1,\lambda)$ : Transmissionsfunktion des Interferenzverlaufsfilters

$I2(X1,\lambda)$ : Intensitätsverteilung nach Filter und Wechselwirkung mit der Probe

In Fig. 3a sei hierzu beispielsweise die Intensitätsverteilung $I2(X1,\lambda)$ nach dem ersten Stoff wiedergegeben.

Der Graph G3 in Fig. 2 zeigt das Emissionsspektrum eines zweiten Stoffes. In Fig. 2 ist nun ebenfalls der Graph G1 aufgetragen, der die prozentuale Transmissionsfunktion des Interferenzverlaufsfilters an der Stelle X1 wiedergibt. Durchsetzt die vom Interferenzverlaufsfilter durchgelassene Strahlung den zweiten Stoff, so ergibt sich demnach eine Intensitätsverteilung, welche in Fig. 3b. aufgetragen ist.

Jeder Stoff ergibt somit innerhalb eines diskreten Frequenzbandes eine ihn charakterisierende Frequenzverteilung wieder. Im optisch aktiven Element tragen nun die einzelnen transmittierten Frequenzen der erhaltenen Strahlung, gewichtet mit der optischen Rotationsdispersionsfunktion $f(I)$, zur Drehung der Schwingungsebene bei. Durch die integrierende Wirkung der photoempfindlichen Fühler ergibt sich somit der optische Schwerpunkt:

$$\lambda_S = \int_{\lambda_1}^{\lambda_2} f(I2(X1,\lambda)) \, \alpha\lambda$$

Anschaulich gesehen liegt also dann der optische Schwerpunkt $\lambda_{S1}$ des ersten Stoffes etwa wie in Fig. 3a aufgetragen und der optische Schwerpunkt $\lambda_{S2}$ des zweiten Stoffes wie in Fig. 3b dargestellt ist. Diese Größen werden von der erfindungsgemässen Meßanordnung bestimmt. Wird ein Gemisch von den beiden Stoffen analysiert, so ergibt sich selbstverständlich auch für das Gemisch eine charakterisierende Intensitätsverteilung, die beispielsweise in Fig. 3c wiedergegeben ist. Der von der Meßanordnung ermittelte optische Schwerpunkt des transmittierten Emissionsspektrums des Stoffgemisches sei $\lambda_{SM}$, wobei dieser Wert zwischen dem optischen Schwerpunkt $\lambda_{S1}$ des ersten und dem optischen Schwerpunkt $\lambda_{S2}$ des zweiten Stoffes liegt. Die normierten Werte von $\lambda_{S1}$ und $\lambda_{S2}$ zu $\lambda_{SM}$ ergeben dann das Mischungsverhältnis der beiden Stoffe im Gemisch. Dies gilt natürlich nur solange keine Wechselwirkungen zwischen den Stoffen auftreten, die das Emissionsspektrum verändern. Mit Hilfe des Interferenzverlaufsfilters lassen sich nun beliebig viele Frequenzbänder aus dem von der Strahlungsquelle emittierten Spektrum selektieren. Sind mehr Substanzen im Stoffgemisch enthalten, so müssen, um deren Konzentrationsverhältnis untereinander bestimmen zu können, auch mehr Messungen bei unterschiedlichen Frequenzbändern durchgeführt werden. Man erhält somit ein Gleichungssystem, wobei jede Gleichung die Meßreihe einer Filterstellung, d.h. die optischen Schwerpunkte der einzelnen Substanzen sowie des Stoffgemisches bei diesem diskreten Frequenzband, darstellt. Die Anzahl der Gleichungen entspricht der Zahl der unterschiedlichen Filterstellungen bei denen gemessen werden muß. Zusammenfassend gesehen lassen sich durch Messungen bei wenigstens n - 1 Filterstellungen, beispielsweise unter Anwendung der Matrizenrechnung, die Konzentrationsverhältnisse von n Stoffen in einem Gemisch bestimmen.

Damit die vorausgehenden Betrachtungen gültig sind, ist es wichtig, daß zwischen der Konzentration C des Stoffes und dem Modulationsgrad des Emissions- bzw. Absorptionsspektrums eine lineare Beziehung besteht. Unter Modulationsgrad wird hier die Eigenschaft von Stoffen verstanden, das von der Lichtquelle emittierte Spektrum zu verändern (Frequenzabhängigkeit der Intensität der von der Probe absorbierten bzw. emittierten Strahlung). Die Konzentration C muß ferner zwischen dem Wert Co = 0 und der Sättigungskonzentration Cs, d.h. der Konzentration bei der das anregende Spektrum substanzspezifisch maximal moduliert wird, liegen.

Die o.g. Voraussetzung ist jedoch in manchen Fällen nicht zutreffend und gilt streng genommen nur für den Fall, daß die Konzentration sehr klein ist, da mit der Konzentration auch die intermolekularen Wechselwirkungen steigen und sich makroskopische Ladungsmuster ausprägen, die das Emissions- bzw. Absorptionsspektrum verändern können.

Mit dem erfindungsgemäßen Verfahren, nämlich der Mehrfachmeßung an unterschiedlichen Frequenzbändern, lassen sich nun ebenfalls die Absolutkonzentrationen von Stoffen in einem Stoffgemisch bestimmen, wo keine - für derartig große Konzentrationsbereiche (Co bis Cs) - lineare Beziehung zwischen Konzentration und Modulationstiefe vorliegt. Hierbei werden erfindungsgemäß die n Spektren eines Stoffes bei m verschiedenen Konzentrationen im relevanten Konzentrationsbereich ermittelt. Die einzelnen Konzentrationen werden vorzugsweise derart gewählt, daß in den n - 1 Intervallen dazwischen, im Rahmen der Meßgenauigkeit, eine lineare Beziehung zwischen Konzentration und Spektrumsmodulationsgrad besteht. In Fig. 4 sei beispielsweise das Absorptionsspektrum eines Stoffes an einer Absorptionsstelle ($\lambda_A$) bei fünf verschiedenen Konzentrationen aufgezeichnet. Untersucht man das Spektrum im Intervall ($\lambda_1$, $\lambda_A$) mittels der gewichteten Spektralintegration, so wird sich die ermittelte Schwerpunktwellenlänge mit zunehmender Konzentration in "Richtung" $\lambda_1$ und im Intervall ($\lambda_1$, $\lambda_2$) nach $\lambda_2$ verschieben. Hieraus ist auch ersichtlich, daß die Frequenzbänder vorzugsweise so gewählt werden, daß die gewichtete Spektralintegration an Flanken des zu untersuchenden Spektrums durchgeführt wird. Dort wird nämlich die größte Auflösung erzielt. Wird nun bei jeder Substanz zwischen m Kalibrier-Konzentrationen interpoliert, so sind bei der Analyse eines Gemisches von n Stoffen gewichtete Spektralintegrationen an wenigstens n · m Frequenzbändern durchzuführen.

Um festzustellen, ob Cs bereits überschritten und daher beispielsweise eine Lösung stärker zu verdünnen ist, ist anspruchsgemäß eine Einrichtung vorgesehen, mit deren Hilfe die anregende Strahlungsintensität verändert werden kann. Dies kann z. B. ein Dichteglas sein, welches in den Strahlengang eingeschwenkt wird. Verändert sich das Emissionsspektrum bei unterschiedlichen Strahlungsintensitäten qualitativ nicht, d.h. bleiben die ermittelten $\lambda_S$ gleich, so ist die Sättigungskonzentration Cs noch nicht erreicht und demzufolge das Meßergebnis gültig.

Um nach dem oben beschriebenen Verfahren ein derartiges Gleichungssystem mit Hilfe eines herkömmlichen Monochromators aufstellen zu können, müßte die übertragene Bandbreite, d.h. der Austrittsspalt am Monochromator infinitesimal klein sein. Der Grund hierfür liegt darin, daß bei den üblichen Meßanordnungen zur Auswertung der am Monochromator durchgelassenen Strahlung immer über die gesamte Bandbreite ungewichtet integriert wird, d.h. in das Meßergebnis geht nur die Intensität ein, wobei die jeweiligen Frequenzanteile unberücksichtigt bleiben. Das Verfahren in Verbindung mit der erfindungsgemäßen Meßanordnung erhöht somit wesentlich den Informationsgehalt spektraler Untersuchungen. Von großem Vorteil ist hierbei, daß die frequenzmäßige Halbwertsbreite des Filters bzw. Monochromators keinen Einfluß auf die Auflösung des Verfahrens hat. Vielmehr soll die Halbwertsbreite des Filters immer möglichst groß gewählt werden, da mit größerer Halbwertsbreite auch die qualitativen Unterschiede zwischen zwei oder mehr Einzelspektren steigen und somit die von der Meßanordnung ermittelten optischen Schwerpunkte einen maximalen Unterschied aufweisen. Die einzelnen Frequenzbänder können sich auch überlagern - es muß nur sichergestellt werden, daß die daraus gewonnenen Gleichungen auch linear voneinander unabhängig sind. Dies kann beispielsweise mittels eines rechnerischen Kontrolldurchlaufs erfolgen. Eine große Halbwertsbreite hat auch den Vorteil, daß, im Gegensatz zu den mit starken Lichtverlusten behafteten anderen Verfahren zur Spektralanalyse, die Nachweisgrenzen wesentlich erweitert werden können.

In Applikationen bei denen die Substanzart durch andere Meßgrößen, z. B. der Retentionszeit in der Chromatographie, bereits bekannt ist, und ferner eine Veränderung der Konzentration dieser Substanz einen linearen Einfluß auf die Modulation des eingestrahlten Spektrums bewirkt, ist es sogar vorteilhaft, gänzlich auf eine Einschränkung des Spektrums, wie dies durch den Filter erfolgt, zu verzichten. Dadurch wird es beispielsweise möglich, die im Bereich der Chromatographie verwendeten Integratoren zu ersetzen, die bekanntlich die Konzentration durch Integration eines Detektorpeaks über dessen Basisbreite bestimmen. Um hierbei eine annehmbare Meßgenauigkeit zu erhalten, muß folglich die Beziehung von dem ermittelten Integral zur Konzentration des Stoffes bekannt sein. Dies ist jedoch nur durch aufwendige Eichverfahren möglich. Die genannten Probleme treten bei einer Meßanordnung gemäß der Erfindung nicht auf, da aufgrund der Bestimmung des optischen Schwerpunkts automatisch über den Detektorpeak integriert und somit eine wesentlich höhere Genauigkeit erzielt wird.

Grundsätzlich können mit der beschriebenen Meßanordnung zur "gewichteten Spektralintegration" feste, flüssige oder gasförmige Substanzen analysiert werden, wobei die Probenkammer zur Aufnahme dieser entsprechend ausgestaltet ist.

Bei dem Einsatz einer neuartigen Analysemethode kann es vorteilhaft sein, ein bekanntes Verfahren zur Kontrolle mitlaufen zu lassen. Hierzu ist in einer weiteren bevorzugten Ausgestaltung der erfindungsgemäßen Meßanordnung zur Bestimmung von photometrischen Größen eine Einrichtung vor dem Probenraum vorgesehen, die dauernd oder zeitweise einen Teil der Strahlung aus den Strahlengang auskoppelt.

Dieser Teilstrahl kann wahlweise direkt oder nach Durchlaufen einer zweiten Probenkammer, die z. B. der Aufnahme eines Referenzstandards dient, auf einen zugeordneten photoempfindlichen Fühler treffen, welcher ein zweites Referenzsignal erzeugt. Wird aus dem zweiten Referenzsignal und aus dem ersten Referenzsignal, welches nach dem Probenraum gewonnen wird, das Verhältnis gebildet, so ist damit die Funktion eines Zweistrahl-Photometers erfüllt. Demgemäß steht zusätzlich ein vollwertiges Spektralphotometer mit eingebauter Wellenlängenkalibriereinrichtung zur Verfügung. Das photometrische Signal, welches gemäß der vorstehend beschriebenen Anordnung aus dem ersten Referenzsignal gewonnen wird, kann auch mittels einer eigenen Einrichtung, beispielsweise einem Strahlteiler, der nach dem Probenraum angeordnet ist, ermittelt werden. Da jedoch dieses photometrische Signal sowie das erste Referenzsignal, welches zur Bestimmung des optischen Schwerpunktes notwendig ist, einander gleich sind, ist es sinnvoll diese Signale auch aus einer gemeinsamen Einrichtung zu gewinnen.

Erfindungsgemäß können auch zwei oder mehr Meßanordnungen bzw. deren funktionelle Gruppen zur spektralen und/oder photometrischen Analyse nach der Erfindung in einem Gerät kombiniert sein. In den anderen Strahlengängen können dann beispielsweise sog. Referenzproben angeordnet sein, so daß damit ein Zweistrahl-Spektralphotometer zur Verfügung steht.

Bei der vorliegenden erfindungsgemäßen Meßanordnung sind grundsätzlich keinerlei mechanisch beweglichen Teile im Meßablauf notwendig. Die Meßgeschwindigkeit wird vielmehr nur von der Datenerfassungszeit der Kurzzeitspeicher, d.h. von den Einschwingzeiten der Sample & Hold - Bausteine, bestimmt. Diese Zeiten liegen, je nach erforderlicher Genauigkeit und Preisklasse, in einem Bereich von 10 nsec bis 15 µsec. Nach der kurzzeitigen Speicherung der analogen Signale werden diese digitalisiert und mittels einer digitalen Datenverarbeitungseinrichtung, beispielsweise eines Mikroprozessors, weiter verarbeitet. Somit stehen die Meßergebnisse unmittelbar, d.h. in Echtzeit zur Verfügung. Insbesondere bei der Analyse von gepulster elektromagnetischer Strahlung ist erfindungsgemäß ein Anschluß vorgesehen, mit welchem der Triggereingang der Strahlungsquelle (z. B. Impulslaser) mit dem Ausgang der den Kurzzeitspeichern zugeordneten ersten Steuerschaltung verbunden werden kann. Demgemäß kann der Datenerfassungszyklus der Meßanordnung mit der Lichtquelle synchronisiert werden.

Wie bereits dargelegt, ist die optische Aktivität immer eine Funktion von der Wellenlänge und der Temperatur. Die Wellenlängenabhängigkeit wird erfindungsgemäß zur Bestimmung der Wellenlänge von elektromagnetischer Strahlung ausgenutzt. Um meßtechnisch exakte Aussagen machen zu können, muß eine genaue Kenntnis der Temperatur des bzw. der optisch aktiven Elemente vorliegen. Hierzu ist erfindungsgemäß zur Erfassung der Temperatur des oder der optisch aktiven Elemente wenigstens ein thermoempfindlicher Fühler elektrisch mit der digitalen Datenverarbeitungseinrichtung verbunden. Das Meßergebnis kann demgemäß durch den Ist-Wert der Temperatur korrigiert werden. Um die vorstehend genannte Korrektur exakt ausführen zu können, ist eine genaue Kenntnis der Temperaturabhängigkeit des verwendeten optisch aktiven Elements erforderlich. Ist diese nicht bekannt, so ist vorzugsweise eine Einrichtung, z. B. ein Peltierelement, zur Temperierung des bzw. der optisch aktiven Elemente vorgesehen.

**Kurze Beschreibung der Zeichnungen**

Im folgenden wird die Erfindung anhand von Ausführungsbeispielen im Zusammenhang mit den Zeichnungen ausführlicher erläutert. Es zeigen:

Fig. 1 das Emissionsspektrum (Intensität über Frequenz) eines ersten Stoffes sowie Transmissionsfunktion eines Interferenzverlaufsfilters an der Stelle X1;

Fig. 2 ein entsprechendes Emissionsspektrum eines zweiten Stoffes;

Fig. 3a die Intensitätsverteilung der Strahlung nach dem Interferenzverlaufsfilter und Wechselwirkung mit dem ersten Stoff;

Fig. 3b einen entsprechenden Verlauf nach Wechselwirkung mit dem zweiten Stoff;

Fig. 3c die entsprechende Intensitätsverteilung nach einem Gemisch aus erstem und zweitem Stoff;

Fig. 4 die Intensitätsverteilung der emittierten Strahlung eines Stoffes in Abhängigkeit von dessen Konzentration im Lösungsmittel zur Erläuterung des hier verwendeten Begriffes "Modulationsgrad";

Fig. 5 eine Prinzipskizze einer Meßanordnung nach einem ersten Ausführungsbeispiel der Erfindung;

Fig. 6 ein Prinzipschaltbild der Meßanordnung nach der Erfindung mit erweitertem Meßbereich;

Fig. 7 ein weiteres Ausführungsbeispiel der Meßanordnung nach der Erfindung, bei dem das optisch aktive Element aus einem gegensinnig verschiebbaren Quarzkeilepaar besteht;

Fig. 8 ein weiteres Ausführungsbeispiel der Meßanordnung nach der Erfindung, bei dem das bzw. die optisch aktiven Elemente von der Strahlung mehrfach durchlaufen werden;

Fig. 9 ein Ausführungsbeispiel der Meßanordnung zur einfachen Wellenlängen- und Energiebestimmung an bzw. in Glasfasernetzen;

Fig. 10 ein weiteres Ausführungsbeispiel einer Meßanordnung nach der Erfindung zur kombinierten gewichteten Spektralintegration und zur spektral-photometrischen Analyse einer Probe;

Fig. 11 ein Ausführungsbeispiel einer Meßanordnung nach der Erfindung zur spektral-photometrischen Analyse von Proben in Echtzeit; und

Fig. 12 ein weiteres Ausführungsbeispiel einer Meßanordnung nach der Erfindung zur Echtzeit-Spektrumsanalyse von elektromagnetischer Strahlung.

**Wege zur Ausführung der Erfindung**

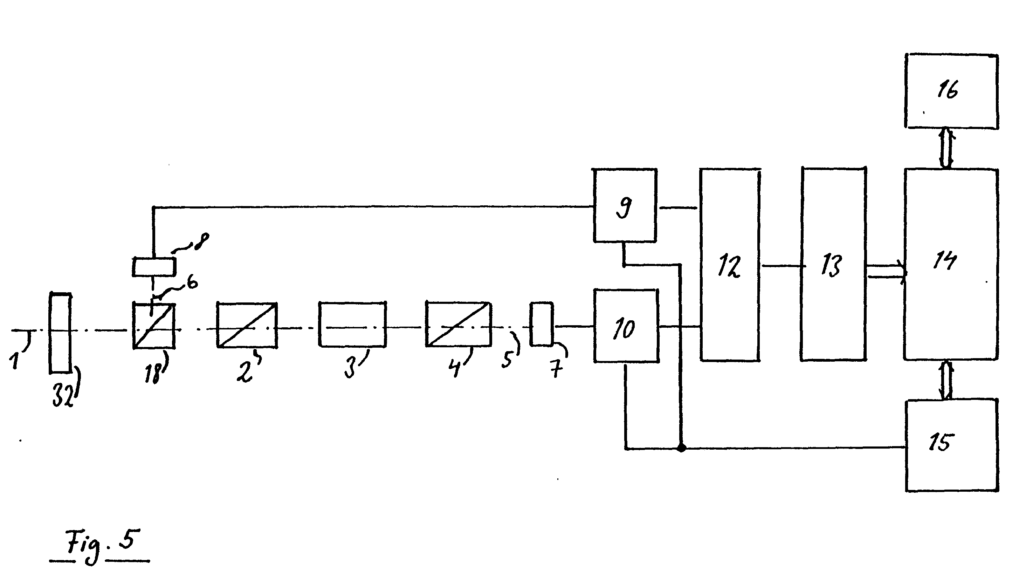

In Figur 5 ist ein erstes Ausführungsbeispiel der Erfindung in schematisierter Form dargestellt. Hierbei sind nacheinander auf der optischen Achse der zu untersuchenden elektromagnetischen Strahlung 1 ein Filter 32, eine Einrichtung 18, insbesondere ein Strahlteiler, zur Auskopplung des ersten Referenzsignals, ein Linearpolarisator 2, ein Quarz als optisch aktives Element 3, und ein Analysator 4 angeordnet. Der zur Bestimmung des ersten Referenzsignals ausgekoppelte Teilstrahl 6 trifft auf einen ersten photoempfindlichen Fühler 8 und die vom Analysator 4 kommende Strahlung 5 auf einen zweiten photoempfindlichen Fühler 7. Die Signalausgänge der beiden photoempfindlichen Fühler 7, 8 sind je über eine Sample & Hold - Schaltung 9, 10 (hier als Kurzzeitspeicher) an die Eingänge einer Divisionsschaltung 12 angeschlossen. Die Kurzzeitspeicher 9, 10 werden hierbei mittels einer ersten Steuerschaltung 15, welche eingangsseitig mit einer digitalen Datenverarbeitungseinrichtung 14 verbunden ist, synchron angesteuert. Der Ausgang der Divisionsschaltung 12 ist hierbei zum Zwecke der Digitalisierung der Meßsignale mit dem Eingang eines A/D-Wandlers 13 verbunden, welcher wiederum ausgangsseitig mit der digitalen Datenverarbeitungseinrichtung 14 verbunden ist. Zum Vergleich der ermittelten Meßergebnisse mit dem ORD-Spektrum des verwendeten optisch aktiven Elements 3, ist die digitale Datenverarbeitungseinrichtung 14 mit einem Speicher 16 verbunden. In dem vorgenannten Speicher 16 sind die charakteristischen Merkmale des optisch aktiven Elements 3, hier eines Quarzes, gespeichert.

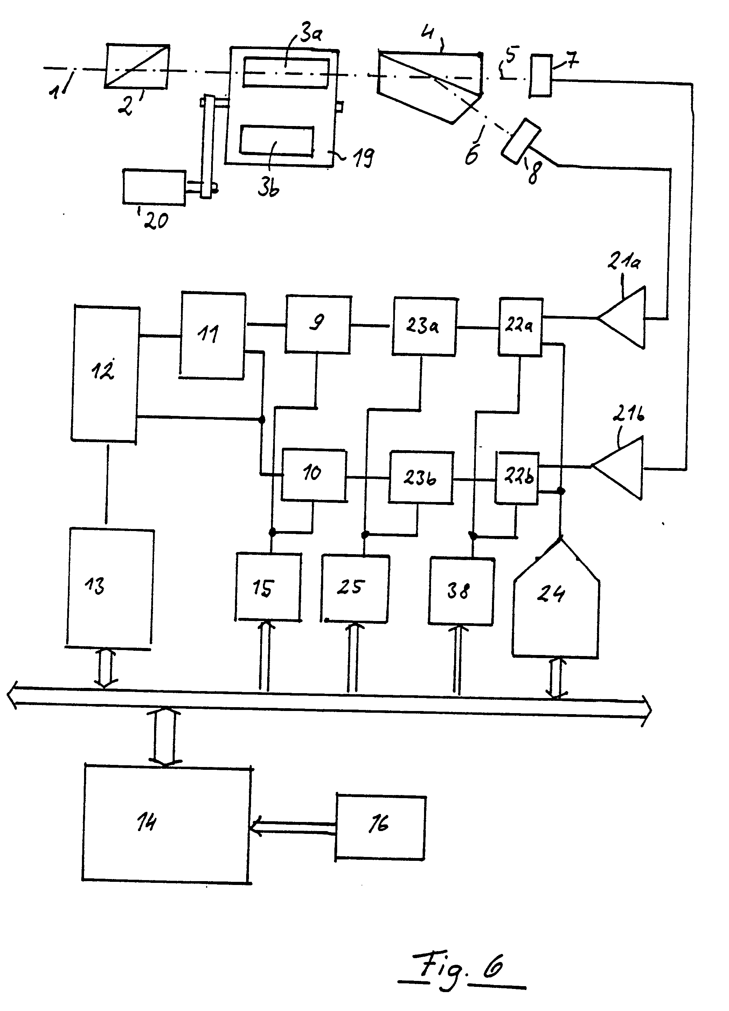

In Figur 6 ist ein Ausführungsbeispiel der Erfindung dargestellt, in welchem eine Erweiterung des Meßbereichs realisiert ist. Hierzu ist im Strahlengang 1 zwischen dem Linearpolarisator 2 und dem Analysator 4 eine Trommel 19 angeordnet, in der sich zwei Quarze 3a, 3b mit einer voneinander verschiedenen Schichtlänge befinden. Die Trommel 19 wird dabei mittels eines Motors 20 angetrieben, so daß die optisch aktiven Elemente 3a, 3b zyklisch nacheinander in den Strahlengang 1 eingeschwenkt werden können. Der Analysator 4 besteht hierbei aus einem strahlteilenden Analysator. Demzufolge wird, wie bereits erläutert, das erste Referenzsignal aus der Summe des aus den strahlteilenden Analysator 4 austretenden ordentlichen und außerordentlichen Teilstrahls 5, 6 gewonnen.

Was die Art des strahlteilenden Analysators betrifft, so ist bei den meisten Polarisations-Doppel- oder Mehrfach-Prismen zwar der Polarisationsgrad beider Teilstrahlen ausreichend, jedoch der Divergenzwinkel zwischen diesen Komponenten abhängig von der Wellenlänge der auf den Strahlteiler auftreffenden elektromagnetischen Strahlung. Demzufolge müßte die Position der Photodetektoren immer der jeweiligen Wellenlänge angepaßt werden. Daher wird bevorzugt ein sog. Foster-Polarisator als strahlteilender Analysatorer eingesetzt, bei dem eine der beiden Komponenten aufgrund einer Totalreflexion an der Kittschicht bzw. am Spalt zwischen den beiden Polarisatorprismen abgelenkt wird. Somit ist der Divergenzwinkel bei diesem Polarisatortyp von der Wellenlänge unabhängig.

Zur Erfassung der Intensitäten der beiden Teilstrahlen 5, 6 befinden sich dann in deren Strahlengängen Photodioden 7, 8. Deren Signalausgänge werden über Eingangsoperationsverstärker 21a, 21b an jeweils einen Eingang einer Schalteinrichtung 22a, 22b angeschlossen. Die Ausgänge der Schalteinrichtungen, welche mittels einer ihnen zugeordneten dritten Steuerschaltung 38 kontrolliert werden, werden an den Eingängen von Instrumentenverstärkern 23a, 23b geleitet, welche widerum ausgangsseitig mit den Eingängen von Sample & Hold - Schaltungen 9, 10 (Kurzzeitspeicher) verbunden sind. Die Ausgänge der

Kurzzeitspeicher 9 bzw. 10 sind weiterhin mit den Eingängen einer Additionsschaltung 11 verbunden. Das Ausgangssignal der Additionsschaltung 11 wird dem Dividendeingang einer Divisionsschaltung 12 zugeführt. Der Divisoreingang der Divisionsschaltung 12 ist gemäß dem Ausführungsbeispiel der Figur 6 mit dem Ausgang des dem außerordentlichen Teilstrahls 5 zugeordneten Kurzzeitspeichers 9 verbunden. Zur Weiterverarbeitung des Ausgangssignals der Divisionsschaltung 12 ist dieser ebenfalls wie in der Meßschaltung gemäß Figur 5 ein A/D-Wandler 13 sowie eine digitale Datenverarbeitungseinrichtung 14 nachgeschaltet. Wahlweise können mittels den Schalteinrichtungen 22a, 22b Kalibrierspannungen an den Eingängen der Instrumentenverstärker 23a, 23b durchgeschaltet werden. Die Kalibrierspannungen werden vorzugsweise mittels eines Digital/Analog-Wandlers 24 erzeugt. Zur Einstellung der Verstärkung der programmierbaren Instrumentenverstärker ist diesen eine zweite Steuerschaltung 25 zugeordnet, welche ihrerseits an die digitale Datenverarbeitungseinrichtung 14 angeschlossen ist.

In Figur 7 ist ein weiteres Ausführungsbeispiel der erfindungsgemäßen Meßanordnung dargestellt, wobei das optisch aktive Element aus einem gegensinnig verschiebbaren Quarzkeilepaar besteht. Die zu analysierende elektromagnetische Strahlung 1 durchläuft hierbei einen Glan-Thompson-Polarisator 2, einen senkrecht zur optischen Achse beweglich angeordneten großen Quarzkeil 3a, welcher mit einem Weggeber 27 gekoppelt ist, einen weiteren kleinen Quarzkeil 3b, und trifft daran anschließend auf einen Glan-Taylor-Polarisator 4 als strahlteilender Analysator. Die beiden senkrecht zueinander polarisierten Strahlungskomponenten des Glan-Taylor-Polarisators werden mittels ihnen zugeordneten Photodetektoren 7, 8 erfaßt, welche ausgangsseitig mit einer Meßschaltung 28 zur weiteren Verarbeitung der Meßsignale verbunden sind. Zur Kontrolle der Stellung des großen Quarzes 3a ist der Weggeber 27 an die digitale Datenverarbeitungseinrichtung angeschlossen.

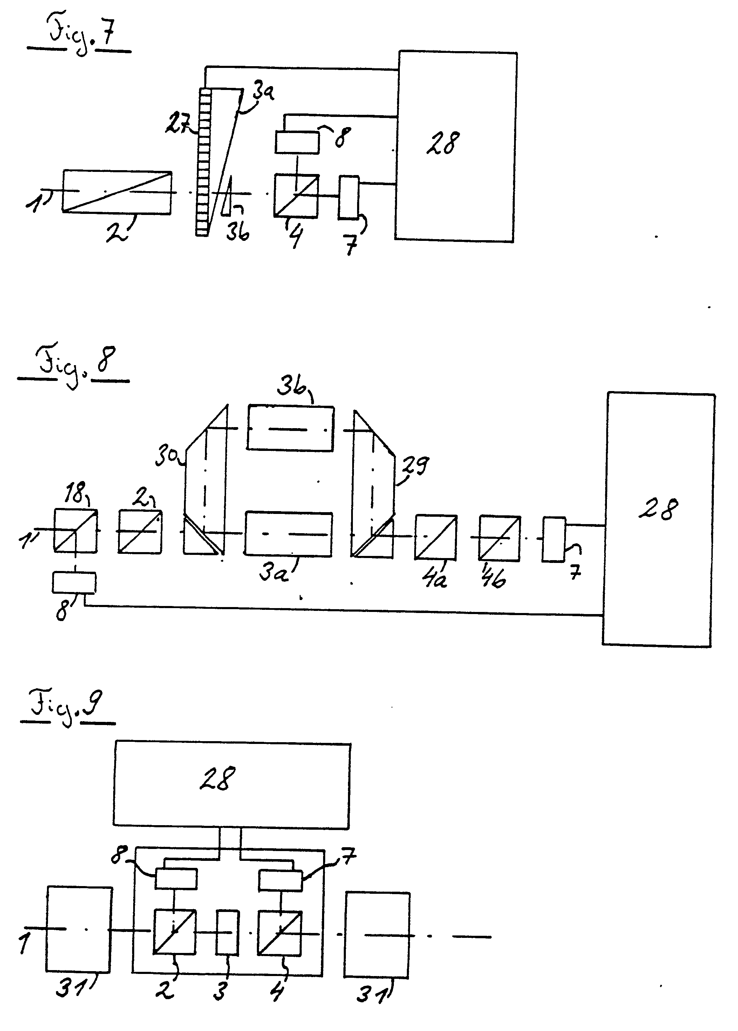

Eine besondere Ausführungsform der Erfindung, die sich für Anwendungen mit hohen Anforderungen an die Auflösung, bis hin zum Zeemaneffekt, eignet, zeigt Figur 8. Hierbei durchläuft die zu analysierende Strahlung 1 zwei optisch aktive Elemente 3a, 3b, die aus einem R- und aus einem L-Quarz bestehen, mehrfach. Der Strahlengang wird mittels zweier dove-ähnlicher Prismen 29, 30 geführt, wobei die mittlere Umlaufzahl sämtlicher Drehanteile durch den Reflexionsgrad der teildurchlässigen Schicht an der Auskoppelstelle des Dove-Prismas 29 bestimmt wird. Die Polarisationseinrichtungen 18, 2, 4a und 4b sind vorzugsweise einfache dielektrische Strahlteilerwürfel. Die vom Analysator 4a, 4b durchgelassene Strahlung sowie der vom Strahlteiler 18 zur Erzeugung des ersten Referenzsignals ausgekoppelte Teilstrahl werden mittels ihnen zugeordneten Photodioden erfaßt.

Zur weiteren Auswertung der Signale sind die Photodioden ebenfalls mit einer Meßschaltung 28 verbunden.

Figur 9 beschreibt eine Ausgestaltung der Meßanordnung zur einfachen Wellenlängen- und Energiebestimmung an bzw. in Glasfasernetzen. Die zu analysierende Strahlung durchläuft hierbei einen strahlteilenden Polarisator 2, eine Quarzplatte 3 und einen strahlteilenden Analysator 4. Die von den Strahlteilern ausgekoppelten Teilstrahlen treffen auf ihnen zugeordneten Photoempfänger 7, 8, wobei der vom strahlteilenden Polarisator 2 ausgekoppelte Teilstrahl dem Referenzsignal und der vom strahlteilenden Analysator 4 ausgekoppelte Teilstrahl dem wellenlängenabhängigen Signal entspricht. Zur leichten Integration der beschriebenen Meßanordnung in Glasfasernetzen ist diese eingangs- und ausgangsseitig mit industrieüblichen Adaptern bestückt.

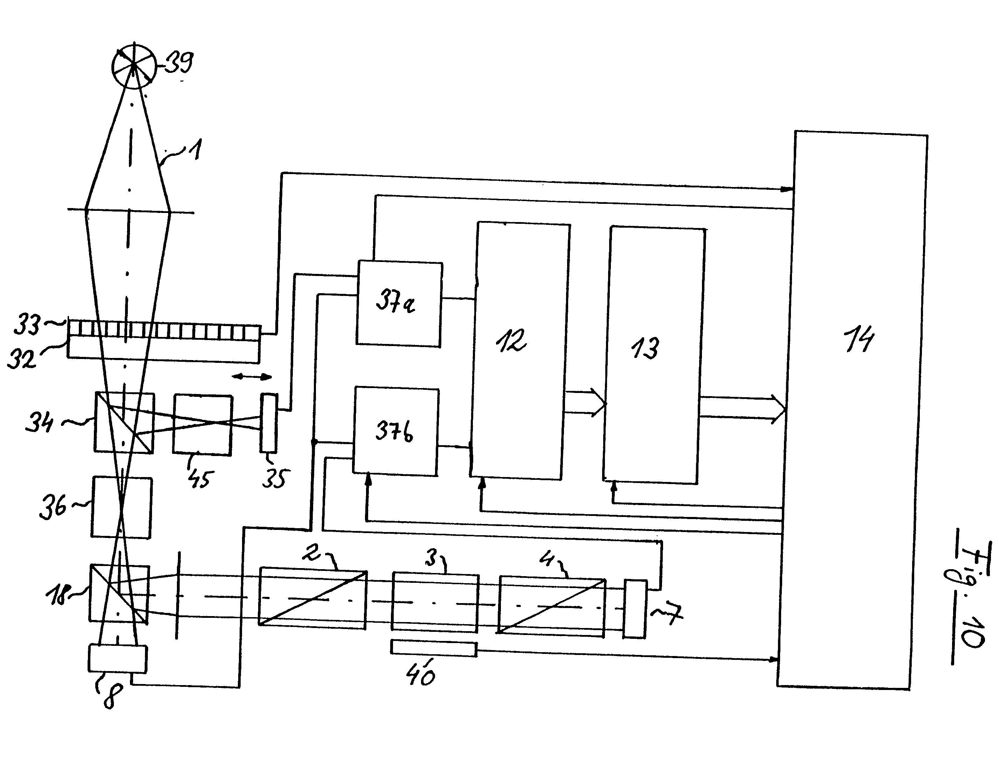

Eine bevorzugte Anordnung zur kombinierten gewichteten Spektralintegration und zur spektralphotometrischen Analyse einer Probe zeigt Figur 10. Die von einer Lichtquelle 39 emittierte Strahlung 1 durchsetzt einen senkrecht zum Strahlengang beweglich angeordneten Interferenzverlaufsfilter 32, einen ersten Strahlteiler 34, die zu untersuchende Probe 36 und einen zweiten Strahlteiler 18. In je einem Teilstrahl der beiden Strahlteiler 34 und 18 befinden sich als Detektoren Fotodioden 35, 8. Zur Aufnahme eines Referenzstandards 45 befindet sich vor der Photodiode 35, welche dem ausgekoppelten Teilstrahl des ersten Strahlteilers 34 zugeordnet ist, eine zweite Probenkammer. Das Ausgangssignal der dem ersten Strahlteiler 34 zugeordneten Photodiode 35 entspricht hierbei dem zweiten Referenzsignal und das Ausgangssignal der dem zweiten Strahlteiler 18 zugeordneten Photodiode 8 dem ersten Referenzsignal. Aus dem Verhältnis der beiden Signale lassen sich nun der Probe zuordenbare photometrische Größen berechnen. Der andere Teilstrahl des zweiten Strahlteilers 18 durchsetzt weiterhin einen Linearpolarisator 2, einen Quarz 3, einen Analysator 4 und trifft anschließend auf eine Photodiode 7 zur Bestimmung des wellenlängenabhängigen Signals. Das Verhältnis dieses Signals zum ersten Referenzsignal dient dann der spektrometrischen Auswertung der Strahlung. Zur Vereinfachung der Meßschaltung werden mittels Analogschalter 37a, 37b wahlweise die Signalausgänge der Photodioden 35 und 8 sowie der Photodioden 8 und 7 an die Eingänge einer Divisionsschaltung 12 geleitet. Zur weiteren Auswertung der gewonnenen Meßsignale ist die Divisionsschaltung 12 über einen Analog/Digital-Wandler 13 an ein Mikroprozessorsystem 14 angeschlossen. Somit können wahlweise photometrische Größen ermittelt oder eine gewichtete Spektralintegration durchgeführt werden. Um die Stellung des Interferenzverlaufsfilters 32 kontrollieren zu können, ist dieser mit einem Weggeber 33 gekoppelt, der seinerseits mit dem Mikroprozessorsystem verbunden ist. Zur Gewährleistung exakter Meßergebnisse ist ein temperaturempfindlicher Fühler 40 ebenfalls elektrisch an das Mikroprozessorsystem angeschlossen.

In Fig. 11 ist eine weitere Ausführungsform nach der Erfindung dargestellt, welche sich allgemein für die Echtzeit-Spektrumsanalyse von elektromagnetischer Strahlung eignet. Insbesondere zur spektral-photometrischen Untersuchung von Stoffen befindet sich ein Probenraum zwischen Strahlungsquelle und Linearpolarisator. Die von der Lichtquelle 39 emittierte Strahlung 1 durchläuft die Probenkammer 36, wo sie in Abhängigkeit vom Stoff bzw. Stoffgemisch hinsichtlich ihres Frequenzspektrums verändert wird, durchsetzt weiterhin den Linearpolarisator 2, ein optisch aktives Element 3 und gelangt über eine Linse 41 an den Analysator 4. Die Linse 41, beispielsweise eine Zylinderlinse oder eine entsprechende Glasfaseroptik, hat hierbei die Funktion, das Lichtstrahlenbündel aufzuweiten. Eventuelle Linsenfehler sind hierbei konstant und können demzufolge kompensiert werden. Vom Analysator 4 gelangt schließlich die Strahlung 1 über einen Interferenzverlaufsfilter 32, welcher hier unbeweglich feststeht, auf ein sog. Photodioden-Array 7. Je nach Auftreffort der Strahlung 1 auf diesen Filter 32 ist dessen Transmissionsfunktion unterschiedlich. Demgemäß gelangt an jedes Element des Photodioden-Arrays 7 jeweils ein definiertes diskretes Frequenzband der Strahlung 1. Die Ausgänge der einzelnen Photodioden des Arrays 7 sind je mit einer Sample & Hold - Schaltung 10 verbunden, deren Signalausgänge den Eingängen eines Multiplexers 42 zugeführt werden, der wiederum ausgangsseitig mit einem Eingang der Divisionsschaltung 12 verbunden ist. Das Referenzsignal wird hierbei von dem ausgekoppelten Teilstrahl des Linearpolarisators 2 gewonnen. In diesem Teilstrahl ist ein photoempfindlicher Fühler 8 angeordnet, dessen Signalausgang über eine Sample & Hold - Schaltung 9 an den anderen Eingang der Divisionsschaltung 12 geleitet wird. Der Ausgang der Divisionsschaltung 12 ist wie bisher mit dem Eingang eines A/D-Wandlers 13 verbunden. Dieser ist seinerseits an ein Mikroprozessorsystem 14 angeschlossen, in welchem die gesamte Steuerung und Auswertung der Meßsignale durchgeführt wird.

Die zeitlichen Verzögerungen, die gemäß der Meßanordnung nach Fig. 10 dadurch entstehen, daß die optischen Schwerpunkte nacheinander bei unterschiedlichen Stellungen des Interferenzverlaufsfilters, d.h. Frequenzbändern, ermittelt werden, entfallen bei der hier beschriebenen Meßanordnung, da hier die Meßwerte bei unterschiedlichen Frequenzbändern gleichzeitig erfaßt werden. Zur Vereinfachung der Meßschaltung werden die in den Sample & Hold - Schaltungen 9 und 10 gespeicherten Meßsignale nacheinander mittels des Multiplexers 42 der weiteren Verarbeitung zugeführt. Durch den Einsatz von entsprechend schnellen Mikroprozessoren, wie sie bereits auf dem Mark erhältlich sind, hat die zeitliche Verzögerung, welche durch das Nacheinander-Abarbeiten der in den Sample & Hold - Schaltungen 10 gespeicherten Meßsignale bedingt ist, kaum mehr einen Einfluß. Die Konzentrationsverhältnisse der einzelnen Substanzen im Stoffgemisch der Probe 36 werden damit quasi in Echtzeit ermittelt. Diese Tatsache macht die beschriebene Meßanordnung insbesondere zur Online-Prozesskontrolle in der chemischen Verfahrenstechnik geeignet. Von Vorteil ist auch hier, daß in den chemischen Produktions- oder Regelkreis nicht eingegriffen werden muß, d.h. dem Kreislauf wird keine Probe entnommen, wie dies beispielsweise in der Chromatographie erforderlich ist.

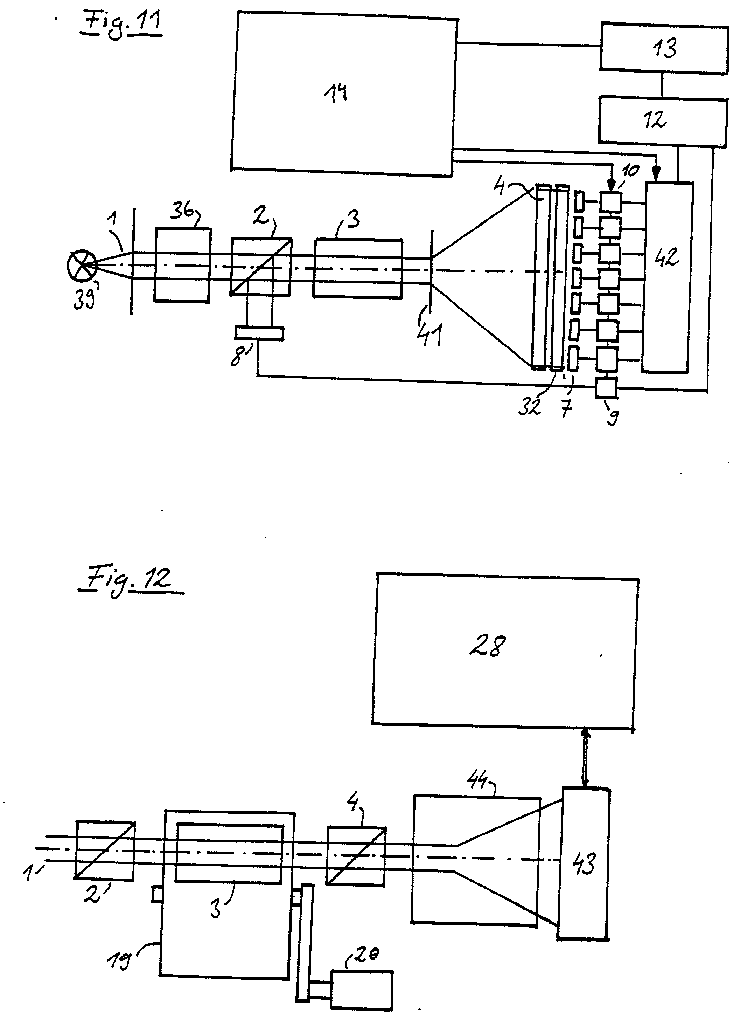

Ein weiteres Ausführungsbeispiel der Meßanordnung zur gleichzeitigen Erfassung der optischen Schwerpunkte bei unterschiedlichen Frequenzbändern ist in Fig. 12 dargestellt. Dieses Ausführungsbeispiel dient ebenfalls ganz allgemein der Analyse elektromagnetischer Strahlung hinsichtlich deren spektraler Charakteristik. Die Strahlung kann z. B. auch zuvor eine Probe durchlaufen haben. Die zu analysierende Strahlung 1 durchläuft hierbei den Linearpolarisator 2, das optisch aktives Element 3 und den Analysator 4. Die Strahlung 1 gelangt weiterhin an ein dispergierendes Element 44, welches beispielsweise ein Beugungsgitter, ein Prisma oder ein akusto-optischer Filter ist. Ein akusto-optischer Filter ist ein im Handel erhältliches Bauelement, das in Abhängigkeit einer extern angelegten akustischen Erregungswelle den Beugungswinkel und demzufolge das Frequenzband der transmittierten Strahlung ändert. Damit kann durch Verändern der Erregungsfrequenz das Spektrum der auf den Filter treffenden Lichtstrahlung durchgescannt werden.

Die nun mittels des dispergierenden Elements spektral aufgefächerte Strahlung 1 trifft daran anschließend auf eine CCD-Zeile 43. Jeder Zelleneinheit der CCD-Zeile wird somit in gleicher Weise wie in dem Ausführungsbeispiel nach Fig. 11 ein diskretes Frequenzband der Strahlung 1 zugeführt. CCD-Zeilen sind handelsübliche Bauelemente, welche z. B. bei Videokameras zur Detektion eingesetzt werden. Die dort über Ladungsträger gespeicherten Informationen, hier die Meßwerte bei den unterschiedlichen Frequenzbändern, können dann sequentiell ausgelesen werden. Zur weiteren Verarbeitung dieser Signale ist die CCD-Zeile mit dem Eingang einer Meßschaltung 28 verbunden. In der vorstehend beschriebenen Meßanordnung kann das optisch aktive Element 3 aus dem Strahlengang 11 heraus und in diesen hinein bewegt werden, hier beispielsweise über eine drehbare Trommel 19. Dieses Herausschwenken dient zur Erzeugung des Referenzsignales, d.h. es wird eine Leermessung durchgeführt, wobei die in der CCD-Zeile detektierten und den einzelnen Frequenzbändern zugeordneten Intensitätswerte als Referenzwerte in der Meßschaltung 28 gespeichert werden. Die dann beim Durchlauf des optisch aktiven Elements 3 von jedem Element der CCD-Zeile 43 detektierten Intensitätswerte werden jeweils hinsichtlich ihrer korrespondierenden und in der Meßschaltung 28 gespeicherten Referenzwerte normiert. Jedem Element der CCD-Zeile 43 ist demzufolge ein eigener Referenzwert zugeordnet, so daß auch erhebliche Unterschiede der Intensität über den Querschnitt der Strahlung 1 keinen Einfluß auf die Meßgenauigkeit haben.

**Patentansprüche**

1. Meßanordnung zur Analyse elektromagnetischer Strahlung (1), insbesondere zur Bestimmung ihrer spektralen Charakteristik, mit
a)  einem linearen Polarisator (2),
b)  zumindest einem optisch aktiven Element (3),
c)  einem Analysator (4), dessen Polarisationsrichtung eine feste Orientierung zur Durchlaßrichtung des linearen Polarisators (2) hat,
d)  in Strahlrichtung vor dem Ausgang des Analysators (4) angeordneten Einrichtungen (4, 18), die den Strahl (1) in einen ordentlichen (6) und einen außerordentlichen Strahl ( 5) aufspalten,
e)  je einem photoempfindlichen Fühler (7, 8) für den ordentlichen und den außerordentlichen Strahl (6, 5), und mit
f)  einer Meßschaltung (28), an die die Signalausgänge der photoempfindlichen Fühler (7, 8) angeschlossen sind, wobei die Meßschaltung zur Berechnung und Ausgabe der Analysewerte eine digitale Datenverarbeitungseinrichtung (14) aufweist,
dadurch <u>gekennzeichnet</u>, daß
g)  die optische Aktivität des zumindest einen optisch aktiven Elements (3) bekannt ist, und daß
h)  die Werte der ORD-Spektren (ORD = optische Rotations-Dispersion) oder andere Referenzfunktionen der verwendeten optisch aktiven Elemente (3) in einem Speicher (zugriffsbereit) für die digitale Datenverarbeitungseinrichtung (14) abgespeichert sind.

2. Meßanordnung nach Anspruch 1 dadurch gekennzeichnet, daß der Analysator (4) eine strahlteilende Polarisationseinrichtung ist und das Referenzsignal aus der Summe der beiden aus dem Strahl teilenden Analysator (4) austretenden Teilstrahlen (5, 6) gewonnen wird.

3. Meßanordnung nach Anspruch 1 oder 2, dadurch gekennzeichnet, daß die Meßschaltung (28) zusätzlich aufweist:
a)  je einen, jedem photoempfindlichen Fühler (7, 8) nachgeschalteten Kurzzeitspeicher (9, 10) mit zugeordneter erster Steuerschaltung (15) zur synchronen, kurzzeitigen Speicherung der Ausgangssignale der photoempfindlichen Fühler, wobei der Ausgang eines der Kurzzeitspeicher (9) mit dem Divisoreingang einer verzögerungsfrei arbeitenden Divisionsschaltung (12) verbunden ist und
b)  eine Additionsschaltung (11), welche eingangsseitig mit den Kurzzeitspeichern (9, 10) verbunden ist und ausgangsseitig mit dem Dividendeingang der Divisionsschaltung (12).

4. Meßanordnung nach einem der Ansprüche 1 bis 3, dadurch gekennzeichnet, daß im Strahlengang mindestens zwei optisch aktive Elemente (3a, 3b) vorgesehen sind, wobei die beiden Elemente (3a, 3b) unterschiedliche, bekannte optische Aktivitäten haben und wobei die von dem einen optisch aktiven Element hervorgerufene Drehung der Lichtschwingungsrichtung im geforderten Meßbereich 90 Winkelgrade nicht überschreitet, während die von dem anderen optisch aktiven Element hervorgerufene Drehung der Lichtschwingungsrichtung im geforderten Meßbereich 90 Winkelgrade überschreitet.

5. Meßanordnung nach Anspruch 4, dadurch gekennzeichnet, daß wenigstens eine der Polarisationseinrichtungen (2, 4) zur Erzeugung des wellenlängenunabhängigen Referenzsignales zyklisch aus dem Strahlengang bewegt wird.

6. Meßanordnung nach Anspruch 1 dadurch gekennzeichnet, daß die Einrichtung (4, 18) zur Ermittlung des Referenzsignals aus einem Strahlteiler besteht, der im Strahlengang vor dem Analysator (4) angeordnet ist.

7. Meßanordnung nach einem der Ansprüche 1 bis 6, dadurch gekennzeichnet, daß jedem Kurzzeitspeicher (9, 10) ein von einer zweiten Steuerschaltung (25) in seiner Verstärkung einstellbarer Verstärker (23a, 23b) vorgeschaltet ist.

8. Meßanordnung nach einem der Ansprüche 1 bis 7, dadurch gekennzeichnet, daß zur Kalibrierung der analogen Komponenten, vor jedem programmierbaren Verstärker (23a, 23b) je ein Schaltelement (22a, 22b) mit zugeordneter dritter Steuerschaltung (38) vorgesehen ist, mit welchem wahlweise eine Kalibrierspannung durchgeschaltet werden kann.

9. Meßanordnung nach einem der Ansprüche 1 bis 8, dadurch gekennzeichnet, daß eine Vorrichtung vorgesehen ist, mit deren Hilfe die optische Aktivität des optisch aktiven Elements (3) kontinuierlich oder quantisiert in definiertem Maß veränderlich ist.

10. Meßanordnung nach Anspruch 9, dadurch gekennzeichnet, daß mittels wenigstens einer rotierenden Trommel (19), deren Rotationsachse parallel zur optischen Achse liegt, mehrere optisch aktive Elemente (3a, 3b) nacheinander oder gleichzeitig zyklisch in den Strahlengang eingeschwenkt werden.

11. Meßanordnung nach Anspruch 9, dadurch gekennzeichnet, daß das oder die optisch aktiven Elemente (3a, 3b) aus zwei zirkular doppelbrechenden Keilen bestehen, die derart gegensinnig verschiebbar im Strahlengang angeordnet sind, daß die von der zu analysierenden elektromagnetischen Strahlung (1) durchlaufene Gesamtschichtlänge veränderbar ist.

12. Meßanordnung nach einem der Ansprüche 1 bis 11, dadurch gekennzeichnet, daß der Strahlengang derart gestaltet ist, daß das bzw. die optisch aktiven Elemente (3a, 3b) von der zu analysierenden Strahlung (1) mehrfach durchlaufen werden.

13. Meßanordnung nach wenigstens einem der Ansprüche 1 bis 12, dadurch gekennzeichnet, daß die Meßanordnung eingangsseitig mit einer Blende, Lichtleitern oder anderen abbildenden Elementen ausgestattet ist.

14. Meßanordnung nach einem der Ansprüche 1 bis 13, dadurch gekennzeichnet, daß zur Bestimmung der spektralen Charakteristik von elektromagnetischer Strahlung (1) die Meßanordnung mit einer Vorrichtung (32) versehen ist, welche nur ein diskretes Frequenzband der zu untersuchenden elektromagnetischen Strahlung (1) durchläßt.

15. Meßanordnung nach einem der Ansprüche 1 bis 15, dadurch gekennzeichnet, daß im Strahlengang vor den photoempfindlichen Auswerteeinrichtungen (7) ein die Strahlung spektral zerlegendes Element (41, 32; 44) angeordnet ist und daß in Strahlrichtung hinter diesem Element mindestens zwei räumlich getrennt angeordnete photoempfindliche Sensoren (7) vorhanden sind, denen unterschiedliche spektrale Anteile der Strahlung zugeleitet werden.

16. Meßanordnung nach Anspruch 15, dadurch gekennzeichnet, daß das die Strahlung spektral zerlegende Element ein dispergierendes Element (44) wie z. B. ein Beugungsgitter oder ein akustooptischer Filter oder eine Kombination aus einem den Lichtstrahl auffächernden Element (41) wie z. B. einer Linse oder einer Glasfaseroptik und einem Interferenzverlaufsfilter (32) ist.

17. Meßanordnung nach Anspruch 14, dadurch gekennzeichnet, daß die Vorrichtung (32) aus einem im Strahlengang beweglich angeordneten Filter (32) besteht, dessen Transmissions-Schwerpunktwellenlänge eine Funktion des Ortes auf dem Filter (32) ist, und dieser mit Stelleinrichtungen und ggf. mit einem Positionsmeßwertgeber (33) gekoppelt ist, der bzw. die elektrisch mit der digitalen Datenverarbeitungseinrichtung (14) verbunden sind.

18. Meßanordnung nach einem der Ansprüche 1 bis 17, dadurch gekennzeichnet, daß zur spektrometrischen und/oder photometrischen Untersuchung von Proben im Strahlengang wenigstens ein Probenraum (36) angeordnet ist, vorzugsweise zwischen der Strahlungsquelle (39) und dem Linearpolarisator (2).

19. Meßanordnung nach Anspruch 16, dadurch gekennzeichnet, daß zur Bestimmung von photometrischen Größen dem Probenraum (36) wenigstens eine Einrichtung (34) vorgeschaltet ist, die zur Erzeugung eines zweiten Referenzsignals einen Teil der Strahlung aus dem Strahlengang auskoppelt.

20. Meßanordnung nach einem oder mehreren der vorstehenden Ansprüche, dadurch gekennzeichnet, daß sie eine Einrichtung aufweist, mit welcher die auf die Probe eingestrahlte Intensität der Strahlung verändert werden kann, wie z. B. ein zwischen Strahlungsquelle (39) und Probe (36) angeordnetes Graufilter.

21. Meßanordnung nach einem der Ansprüche 1 bis 20, dadurch gekennzeichnet, daß bei der Analyse von gepulster elektromagnetischer Strahlung (1) zur Synchronisierung mit den Kurzzeitspeichern (9, 10) ein Anschluß vorgesehen ist, mit welchem der Triggereingang der Strahlungsquelle (z. B. Impuls-Laser) mit dem Ausgang der den Kurzzeitspeichern (9, 10) zugeordneten ersten Steuerschaltung (15) verbindbar ist.

22. Meßanordnung nach einem der Ansprüche 1 bis 21, dadurch gekennzeichnet, daß zur Erfassung der Temperatur des oder der optisch aktiven Elemente (3) wenigstens ein thermoempfindlicher Fühler (40) elektrisch mit der digitalen Datenverarbeitungseinrichtung (14) verbunden ist zur temperaturabhängigen Korrektur des Meßergebnisses.

## Claims

1. Measuring equipment for analysing electromagnetic radiation (1), more particularly for determining its spectral characteristic, with
   a) a linear polariser (2),
   b) at least one optically active element (3),
   c) an analyser (4), whose polarisation direction has a fixed orientation in relation to the transmission direction of the linear polariser (2),
   d) devices (4, 18) arranged in beam direction before the output of the analyser (4) which split the beam (1) into an ordinary beam (6) and an extraordinary beam (5),
   e) one photosensitive sensor (7, 8) for each of the ordinary and the extraordinary beam (6, 5), and with
   f) a measuring circuit (28) to which the signal outputs of the photosensitive sensors (7, 8) are connected, the measuring circuit having a digital data processing device (14) to calculate and feed out the analysis values,
   characterised in that
   g) the optical activity of the at least one optically active element (3) is known, and in that
   h) the values of the ORD-spectra (ORD = optical rotation dispersion) or other reference functions of the optically active elements (3) used are stored in a memory (access-ready) for the digital data processing device (14).

2. Measuring equipment according to claim 1, characterised in that the analyser (4) is a beam-dividing polarisation device and the reference signal is obtained from the sum of the two part beams (5, 6) emerging from the analyser (4) which divides the beam.

3. Measuring equipment according to claim 1 or 2, characterised in that the measuring circuit (28) has in addition:
   a) one short-term memory (9, 10) respectively connected in series with each photosensitive sensor (7, 8) with a first control circuit (15) assigned to it for the synchronous, short-term storage of the output signals of the photosensitive sensors, the output of one of the short-term memories (9) being connected to the divisor input of a division circuit (12) which is delay-free in operation, and

b) a addition circuit (11) which is connected on the input side to the short-term memories (9, 10) and on the output side to the dividend input of the division circuit (12).

4. Measuring equipment according to one of claims 1 to 3,

characterised in that at least two optically active elements (3a, 3b) are provided in the beam path, wherein the two elements (3a, 3b) have different known optical activities and the rotation, caused by one optically active element, of the light oscillation direction in the required measurement range does not exceed 90 angle degrees, while the rotation, caused by the other optically active element, of the light oscillation direction in the required measurement range exceeds 90 angle degrees.

5. Measuring equipment according to claim 4, characterised in that at least one of the polarisation devices (2, 4) for producing the reference signal which is independent of the wavelength is moved cyclically out of the beam path.

6. Measuring equipment according to claim 1, characterised in that the device (4, 18) for determining the reference signal consists of a beam divider arranged in the beam path before the analyser (4).

7. Measuring equipment according to one of claims 1 to 6,

characterised in that there is connected before each short-term memory (9, 10) an amplifier (23a, 23b) whose amplification is adjustable by means of a second control circuit (25).

8. Measuring equipment according to one of claims 1 to 7,

characterised in that in order to calibrate the analogue components there is provided before each programmable amplifier (23a, 23b) a respective switching element (22a, 22b) with a third control circuit (38) assigned to it, with which switching element a calibrating voltage may optionally be switched through.

9. Measuring equipment according to one of claims 1 to 8,

characterised in that a device is provided by means of which the optical activity of the optically active element (3) is variable continuously or quantised in a defined measurement.

10. Measuring equipment according to claim 9,

characterised in that by means of at least one rotating drum (19), whose axis of rotation lies parallel to the optical axis, several optically active elements (3a, 3b) are swivelled cyclically into the beam path one after another or simultaneously.

11. Measuring equipment according to claim 9,

characterised in that the optically active element or elements (3a, 3b) consist of two circularly doublerefracting wedges which are arranged in the beam path so as to be displaceable in opposite directions such that the total layer length through which the electromagnetic radiation (1) to be analysed passes is variable.

12. Measuring equipment according to one of claims 1 to 11,

characterised in that the beam path is formed such that the radiation (1) to be analysed passes through the optically active element or elements (3a, 3b) several times.

13. Measuring equipment according to at least one of claims 1 to 12,

characterised in that the measuring equipment is provided on the input side with a diaphragm, light conductors or other elements which form an image.

14. Measuring equipment according to one of claims 1 to 13,

characterised in that in order to determine the spectral characteristic of electromagnetic radiation (1), the measuring equipment is provided with a device (32) which only allows through a discrete frequency band of the electromagnetic radiation (1) to be analysed.

15. Measuring equipment according to one of claims 1 to 15,

characterised in that arranged in the beam path before the photosensitive evaluation devices (7) is an element (41, 32; 44) which dissects the radiation spectrally and in that in beam direction behind this element there are at least two photosensitive sensors (7) which are disposed spatially separated and to which differing spectral components of the radiation are conveyed.

16. Measuring equipment according to claim 15,

characterised in that the element dissecting the radiation spectrally is a dispersing element (44) such as a diffraction grating for instance, or an acousto-optical filter or a combination of an element (41) which fans out the light beam, such as a lens or glass fibre optics for example, and an interference path filter (32).

17. Measuring equipment according to claim 14,

characterised in that the device (32) consists of a filter (32) arranged moveably in the beam path, whose effective transmission wavelength is a function of the location on the filter (32), and the latter is coupled with adjustment devices and if necessary with a position measurement value sensor (33) which is or are connected electrically to the digital data processing device (14).

18. Measuring equipment according to one of claims 1 to 17,

characterised in that for the spectrometric and/or photometric examination of samples at least one sample chamber (36) is arranged in the beam path, preferably between the radiation source (39) and the linear polariser

19. Measuring equipment according to claim 16,

characterised in that in order to determine photometric quantities, there is connected before the sample chamber (36) at least one device (34) which couples out part of the radiation from the radiation path to produce a second reference signal.

20. Measuring equipment according to one or more of the preceding claims,

characterised in that it has a device with which the intensity of the radiation beamed on to the sample can be varied, such as, for example, a neutral filter disposed between the radiation source (39) and the sample (36).

21. Measuring equipment according to one of claims 1 to 20

characterised in that when pulsed electromagnetic radiation (1) is analysed, for the purpose of synchronisation with the short-term memories (9, 10) there is provided a connection with which the trigger input of the radiation source (e.g. pulse laser) may be connected to the output of the first control circuit (15) assigned to the short-term memories (9, 10).

22. Measuring equipment according to one of claims 1 to 21,

characterised in that in order to determine the temperature of the optically active element or elements (3), at least one thermosensitive sensor (40) is electrically connected to the digital data processing device (14) for temperature-dependent correction of the measurement result.

## Revendications

1. Dispositif de mesure destiné à l'analyse de rayonnement électromagnétique (1) en particulier pour la détermination de sa caractéristique spectrale, comportant:
   a) un polariseur linéaire (2);
   b) au moins un élément optique actif (3);
   c) un analyseur (4) dont la direction de polarisation comporte une orientation fixe par rapport à la direction de traversée du polariseur linéaire (2);
   d) des dispositif (4, 18) qui sont disposés dans la direction du rayonnement devant la sortie de l'analyseur (4) et qui partagent le rayonnement (1) en un rayonnement ordinaire (6), et en un rayonnement extraordinaire (5);
   e) un capteur photosensible (7, 8) pour chacun des rayonnements (6, 5) ordinaire et extraordinaire; et
   f) un circuit de mesure (28) auquel sont connectées les sorties de signal des capteurs photosensibles (7, 8), le circuit de mesure présentant un dispositif numérique de traitement de données (14) pour le calcul et l'émission des valeurs d'analyse;
   caractérisé en ce que:
   g) l'activité optique d'au moins un élément optique actif (3), est connue; et en ce que
   h) les valeurs des spectres ORD (ORD = dispersion rotative optique) ou d'autres fonctions de référence de l'élément optique actif utilisé (3) sont mises en mémoire dans une mémoire (prêtes à l'accès), pour le dispositif numérique de traitement de données (14).

2. Dispositif de mesure selon la revendication 1, caractérisé en ce que l'analyseur (4) est un dispositif de polarisation à division de rayonnement et en ce que le signal de référence est obtenu à partir de la somme des deux rayonnement partiels (5, 6) sortant de l'analyseur (4) à division de rayonnement.

3. Dispositif selon la revendication 1 ou 2, caractérisé en ce que le circuit de mesure (28) présente de plus:
   a) une mémoire temporaire (9, 10) connectée en aval de chacun des capteurs photosensibles (7, 8), comportant un premier circuit de commande annexé (15) destiné à la mise en mémoire temporaire synchrone des signaux de sortie des capteurs photosensibles, la sortie d'une des mémoires temporaires (9) étant reliée à l'entrée de diviseur d'un circuit diviseur (12) travaillant sans temporisation; et
   b) un circuit d'addition (11) qui est connecté à l'entrée aux mémoires temporaires (9, 10) et à la sortie avec l'entrée de dividende du circuit de division (12).

4. Dispositif de mesure selon l'une des revendications 1 à 3, caractérisé en ce que l'on prévoit dans le trajet du rayonnement au moins deux éléments optique actifs (3a, 3b), les deux éléments (3a, 3b) ayant des activités optiques connues, différentes et, la rotation de la direction de vibration de la lumière provoquée par l'un des élément optique actif ne dépassant pas 90 degrés d'angle dans le domaine de mesure en cause, tandis que la rotation de la direction de vibration de la lumière provoquée par l'autre élément optique actif dépasse 90 degrés d'angle dans le domaine de mesure en cause.

5. Dispositif de mesure selon la revendication 4, caractérisé en ce qu'au moins l'un des dispositifs de polarisation (2, 4) est déplacé cycliquement hors du trajet du rayonnement, pour produire le signal de référence indépendant de la longueur d'onde.

6. Dispositif de mesure selon la revendication 1, caractérisé en ce que le dispositif (4, 18) destiné à établir le signal de référence est constitué par un organe de division de rayonnement qui est disposé sur le trajet de rayonnement devant l'analyseur.

7. Dispositif de mesure selon l'une des revendications 1 à 6, caractérisé en ce qu'un amplificateur (23a, 23b) dont l'amplification est réglable au moyen d'un deuxième circuit de commande (25) est branché en amont de chacune des mémoires temporaires (9, 10).

8. Dispositif de mesure selon l'une des revendications 1 à 7, caractérisé en ce que pour l'étalonnage des composantes analogiques, un élément de commutation (22a, 22b) comportant un troisième circuit de commande (38) qui lui est affecté est prévu devant chacun des amplificateurs programmables (23a, 23b), au moyen duquel on peut coupler une tension d'étalonnage choisie.

9. Dispositif de mesure selon l'une des revendications 1 à 8, caractérisé en ce que l'on prévoit un dispositif à l'aide duquel on peut faire varier l'activité optique de l'élément optique actif (3), en continu, ou de façon quantifiée dans une mesure définie.

10. Dispositif de mesure selon la revendication 9, caractérisé en ce qu'au moyen d'au moins un tambour rotatif (19), dont l'axe de rotation est parallèle à l'axe optique, plusieurs éléments optiques actifs (3a, 3b) peuvent successivement ou simultanément être amenés par pivotement de façon cyclique dans le trajet de rayonnement.

11. Dispositif de mesure selon la revendication 9, caractérisé en ce que le ou les éléments optique actifs (3a, 3b) sont constitués par deux prismes biréfringents circulairement qui peuvent être déplacés en translation en sens inverse, sur le trajet de rayonnement, de manière telle que l'épaisseur totale de lame parcourue par le rayonnement électromagnétique (1) qui doit être analysé, soit variable.

12. Dispositif de mesure selon l'une des revendications 1 à 11, caractérisé en ce que le trajet de rayonnement est conformé de façon telle que le, respectivement les éléments optique actifs (3a, 3b) sont parcourus plusieurs fois par le rayonnement (1) qui doit être analysé.

13. Dispositif de mesure selon au moins l'une des revendications 1 à 12, caractérisé en ce que le dispositif de mesure est équipé du côté de l'entrée d'un diaphragme, des guides de lumière ou d'autres éléments de projection de lumière.

14. Dispositif de mesure selon l'une des revendications 1 à 13, caractérisé en ce qu'en vue de la détermination de la caractéristique spectrale du rayonnements électromagnétiques (1), le dispositif de mesure est équipé d'un dispositif (32) qui ne laisse passer qu'une bande de fréquence discrète du rayonnement électromagnétique (1) a examiner.

15. Dispositif de mesure selon l'une des revendications 1 à 15, caractérisé en ce qu'un élément (41, 32, 44) décomposant spectralement le rayonnement est disposé sur le trajet de rayonnement en amont des dispositifs d'évaluation photosensibles (7) et en ce que dans la direction du rayonnement derrière cet élément sont prévus au moins deux capteurs photosensibles (7) disposés de façon séparée dans l'espace, auxquels sont transmis des composants spectraux différents du rayonnement.

16. Dispositif de mesure selon la revendication 15, caractérisé en ce que l'élément décomposant spectralement le rayonnement est un élément dispersant (44) tel que par exemple, un réseau de diffraction ou bien un filtre opto-acoustique, ou bien une combinaison d'un élément (41) compartimentant le rayonnement de lumière tel que par exemple, une lentille ou une optique de fibre de verre, et un filtre d'interférence (32).

17. Dispositif de mesure selon la revendication 14, caractérisé en ce que le dispositif (32) est constitué par un filtre (32) disposé de façon mobile sur le trajet de rayonnement, dont la longueur d'onde du centre de gravité de transmission est fonction de l'emplacement sur le filtre (32) et en ce que celui-ci est accouplé à des dispositifs de réglage et, le cas échéant, avec un indicateur de valeur de mesure de position (33) qui sont reliés électriquement au dispositif numérique de traitement de données (14).

18. Dispositif de mesure selon une des revendications 1 à 17, caractérisé en ce que pour l'examen spectrométrique et/ou photométrique d'échantillons, au moins un espace d'échantillonnages (36) est disposé sur le trajet de rayonnement, de préférence entre la source de rayonnement (39) et le polariseur linéaire (2).

19. Dispositif de mesure selon la revendication 16, caractérisé en ce qu'en vue de la détermination de grandeurs photométriques au moins un dispositif (34) est placé en amont de l'espace d'échantillonnages (36) et découple une partie du rayonnement, à partir du trajet de rayonnement en vue de la production d'un deuxième signal de référence.

20. Dispositif de mesure selon une ou plusieurs des revendications précédentes, caractérisé en ce qu'il comporte un système au moyen duquel on peut faire varier l'intensité du rayonnement envoyée sur l'échantillon, comme par exemple, un filtre gris disposé entre la source de rayonnement (39) et l'échantillon (36).

21. Dispositif de mesure selon l'une des revendications 1 à 20, caractérisé en ce que lors de l'analyse d'un rayonnement électromagnétique pulsé (1), on prévoit en vue de la synchronisation avec les mémoires temporaires (9, 10) une connection au moyen de laquelle l'entrée de déclenchement de la source de rayonnement (par exemple un laser à impulsion), peut être connectée à la sortie du premier circuit de commande (15) affecté aux mémoires temporaires (9, 10).

22. Dispositif de mesure selon l'une des revendications 1 à 21, caractérisé en ce que pour la saisie de la température de l'élément optique actif, du ou des éléments optiques actifs (3), au moins un capteur thermosensible (40) est relié électriquement au dispositif (14) de traitement de données, en vue de la correction du résultat de mesure en fonction de la température.

EP 0 195 039 B1

Fig. 1

Fig. 2

Fig. 3a

Fig. 3b

Fig. 3c

Fig. 4

Fig. 5

_Fig. 6_

Fig. 7

Fig. 8

Fig. 9

7

Fig. 10

Fig. 11

Fig. 12